# EUROPÄISCHE PATENTSCHRIFT

(11) **EP 2 151 403 B1**
(45) Veröffentlichungstag und Bekanntmachung des Hinweises auf die Patenterteilung: **19.12.2012**
(21) Anmeldenummer: 09010032.2
(22) Anmeldetag: 04.08.2009
(51) Int. Cl.: B65G 67/20, B65G 69/24

(54) **Logistiksystem**
Logistics system
Système logistique

(30) Priorität: 04.08.2008 DE 102008036067; 21.04.2009 DE 102009018237; 28.05.2009 DE 102009022990
(43) Veröffentlichungstag der Anmeldung: 10.02.2010
(73) Patentinhaber: Buse, Heinz, 26160 Bad Zwischenahn (DE)
(72) Erfinder: Buse, Heinz, 26160 Bad Zwischenahn (DE)
(74) Vertreter: Eisenführ, Speiser & Partner

(56) Entgegenhaltungen:
- EP-A1- 0 467 586
- DE-A1- 10 000 131
- FR-A1- 2 768 709
- US-A- 3 938 678

## Beschreibung

Die Erfindung betrifft ein Verfahren zum Beladen von Fahrzeugen und ein Verfahren zum Entladen von Fahrzeugen und ein Logistiksystem sowie deren einzelne Teile hiervon, die zusammen das gesamte System bilden können, zum Beladen von Fahrzeugen und zum Entladen von Fahrzeugen.

Bei bereits vorhandenen Lagern oder Kommissionierungseinheiten gibt es eine Vielzahl von Andockstationen (auch als Hallentore bezeichnet), an die die LKWs jeweils mit ihrer Rückseite heranfahren können, um die Güter zu übernehmen. Solche Güterlager oder Kommissionierungseinheiten bestehen in einer großen Vielzahl und häufig gibt es die Möglichkeit, dass eine Vielzahl von Fahrzeugen gleichzeitig an die Andockstationen, die jeweils in einer Gebäudewand miteinander fluchtend nebeneinanderliegen, heranfährt. So können ebenso viele LKWs andocken, wie entsprechende Andockstationen, also Gebäudewandöffnungen/Hallentore, vorhanden sind. Dabei sind diese Andockstationen meist auf der Höhe der Ladeflächen der LKWs angeordnet, damit der Lagerboden und die Ladefläche des LKWs eine Ebene bilden und der LKW z.B. durch das Befahren durch Gabelstapler ent- und beladen werden kann. Da bei dieser Art des Ent- und Beladens jeder Gabelstapler oder sonstige Transporteinrichtung lediglich eine oder einige wenige Warenpalletten transportieren kann, ist die Art des Be- und Entladens sehr zeitintensiv. Auch kann der zu be- und entladende LKW während der gesamten Zeit des Be- und Entladens nicht von der Andockstation wegbewegt werden.

Mit dem Logistiksystem des Dokuments EP 1 808 387 A2, welches als nächstliegender Stand der Technik angesehen werden soll, wird ein System offenbart, bei dem die zu be- und entladende Fracht auf einer Güterplattformen, auch als Plattformen oder Ladungsträger bezeichnet, gelagert wird und die gesamte Plattform mitsamt der Fracht vom LKW bzw. auf den LKW in einem Arbeitsvorgang verfrachtet wird. D.h. die gesamte Plattform mit den Gütern ist in einem Schritt an ein Fahrzeug übergebbar oder kann in einem Schritt von einem Fahrzeug übernommen werden.

In den entsprechenden Lager- und Kommissionierungsbereichen des Logistiksystems des Dokuments EP 1 808 387 A2 werden entweder die Plattformen gelagert, sei es bereits mit Gütern beladen oder auch unbeladen, oder die einzelnen Plattformen werden dort mit entsprechenden Gütern kommissioniert oder beladen, um dann in die Logistikkette übergeben werden zu können, was nichts anderes bedeutet, als dass Fahrzeuge, z. B. LKWs oder auch Züge, die Plattformen übernehmen und an den nächsten gewünschten Zielort verfrachten.

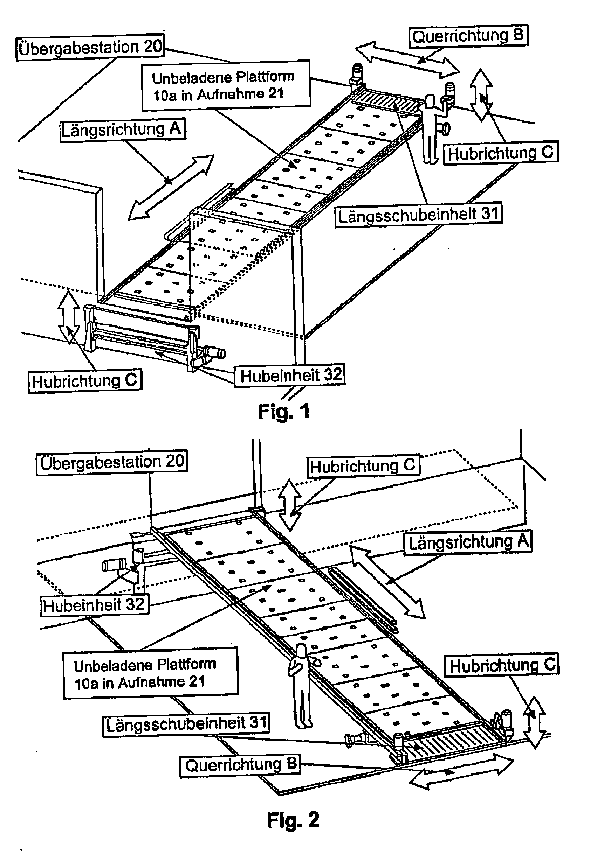

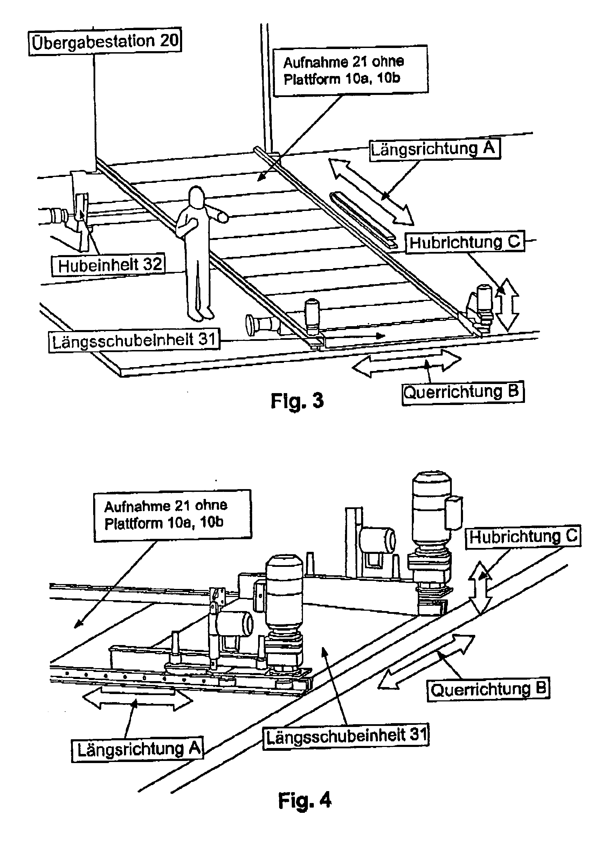

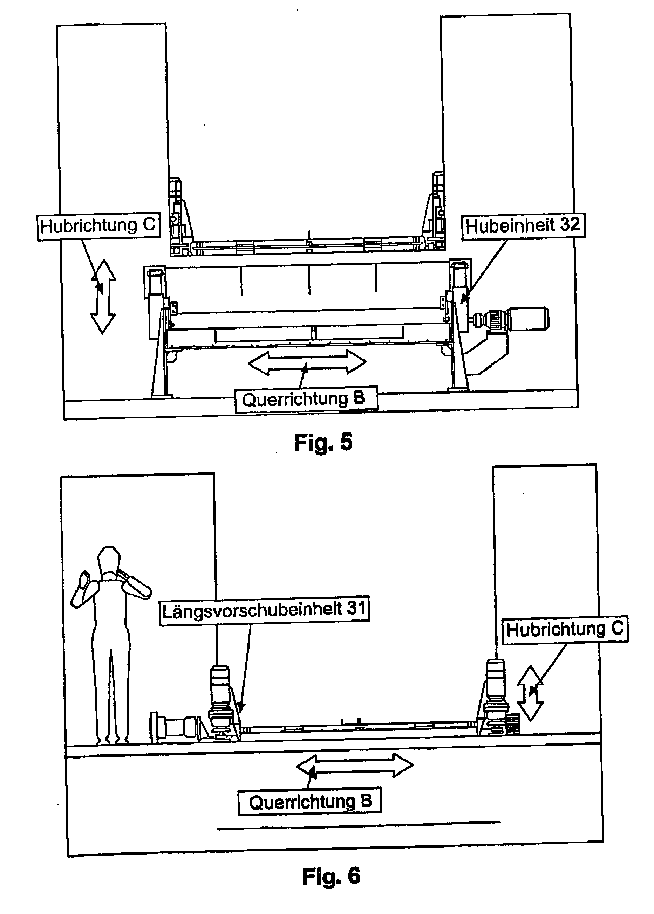

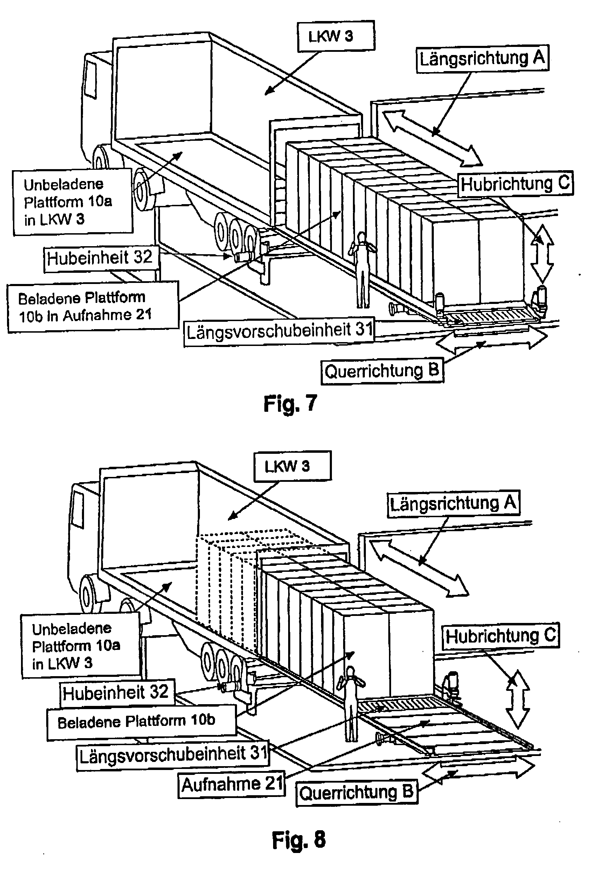

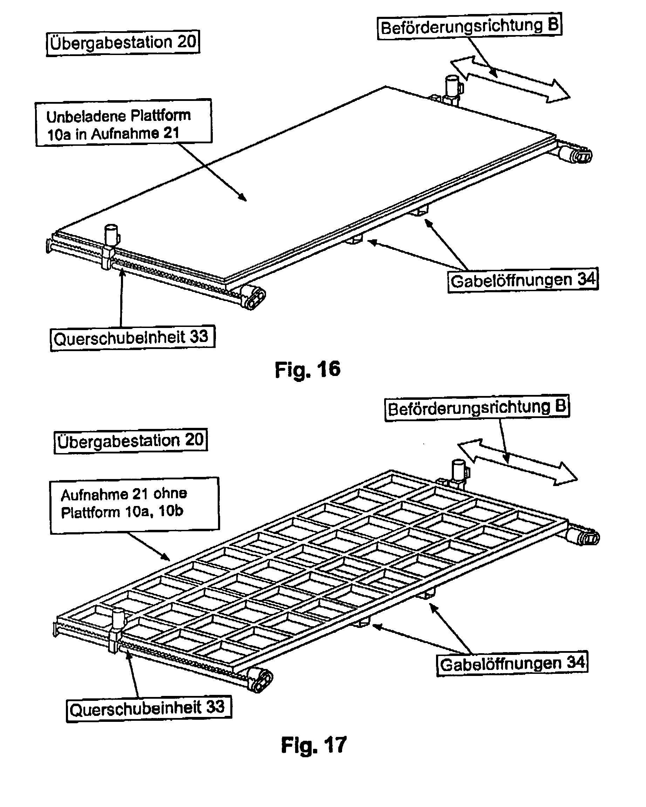

Figur 2 der EP 1 808 387 A2 zeigt, dass dort ein eigenständiges Gebäude benötigt wird, um die Plattformen an die Fahrzeuge zu übergeben oder von dort zu übernehmen. Die Figuren 4 und 6 zeigen bereits wesentliche Bestandteile einer Übergabestation, welche derart verschwenkbar ist, dass sie sich auf die Ladefläche eines Fahrzeugs hin ausrichten kann und auch die weiteren Figuren 7 bis 15 zeigen wichtige Bestandteile einer Übergabestation für die Plattform. Weitere Einzelheiten der Übergabestation sind auch in den Figuren 17, 25, 26 und 29 gezeigt.

In der DE 196 35 858 A1 wird eine Vorrichtung zum seitlichen Be- und Entladen palettierter Ladeeinheiten von seitlich für Be- und Entladetechnik zugänglichen Fahrzeugen wie Lastkraftwagen, Anhänger, Eisenbahnwaggons usw. innerhalb eines automatisierten Güterumschlagssystems beschrieben. Dabei befindet sich an einer Be- und Entladestation eine Gleisanlage mit einem Verschiebewagen, der mit heb- und senkbaren Gabeln bestückt ist. Mittels der Gabeln werden mehrere Paletten seitlich zum Fahrzeug ent- und beladen. Daraufhin verfährt der Verschiebewagen parallel zur Längsrichtung des Fahrzeugs und der Ent- und Beladevorgang wird an einer weiteren Position der Ladefläche des Fahrzeugs wiederholt. Ein Erkennungs- und Meßsystem ist auf das Nutzfahrzeug und dessen Ladung ausrichtbar.

In der DE 698 03 556 T2 wird eine Eisenbahnumschlagstation zum Be- und Entladen von Eisenbahnwaggons mit Frachtbehältern beschrieben. Dabei umfasst die Eisenbahnumschlagstation einen Gleisabschnitt, auf dem die zu be- und entladenden Eisenbahnwagons an die Eisenbahnumschlagstation herangefahren werden, und wenigstens eine Belade- und/oder Entladeplattform, welche entlang des und benachbart zu dem Gleisabschnitt angeordnet ist und welche auf einem höheren Niveau als der Gleisabschnitt liegt. Die Frachtbehälter können seitlich zu beiden Seiten der Eisenbahnwagons be- und entladen werden. Dabei werden die zu be- und entladenden Eisenbahnwagons während des Be- und Entladevorgangs durch Träger von unten gestützt, um während des gesamten Be- und Entladevorgangs den Eisenbahnwagon auf einer festen, vorbestimmten Höhe zu halten.

Das Logistiksystem des Dokuments EP 1 808 387 A2 hat sich bereits bewährt, ist aber aus bautechnischen Gründen nicht überall umsetzbar. Dies gilt vor allem dann, wenn das dort beschriebene Logistiksystem an bereits bestehende Lager und Kommissionierungsbereiche angepasst werden soll und bzw. oder eine einfache, kostengünstige und platzsparende Lösung erforderlich ist.

Die Aufgabe der vorliegenden Erfindung besteht darin, das Logistiksystem des Dokuments EP 1 808 387 A2 auf einfache und kostengünstige Art und Weise so weiterzuentwickeln, dass es mit bereits bestehenden Güterlägern oder Güterkommissionierungseinrichtungen platzsparend kombinierbar ist, ohne einen besonders großen baulichen Aufwand an den bisherigen Einrichtungen vorzunehmen.

Die Erfindung wird gelöst durch ein Verfahren zum Beladen von Fahrzeugen nach Anspruch 1, ein Verfahren zum Entladen von Fahrzeugen nach Anspruch 2 sowie einem Logistiksystem mit den Merkmalen nach Anspruch 3. Vorteilhafte Weiterbildungen sind in den Unteransprüchen, besonders aber auch in den Zeichnungen und in der nachfolgenden Beschreibung dargestellt.

Es ist vorgesehen, das Logistiksystem des Dokuments EP 1 808 387 A2 so weiterzubilden, dass in dem Lagergebäude, in dem entweder die Waren oder Plattformen gelagert oder kommissioniert werden, eine oder mehrere Übergabestationen des erfindungsgemäßen Logistiksystems eingerichtet werden, durch die jeweils zwei Plattenformen übereinander gestapelt von einem LKW aufgenommen und/oder an einen LKW abgegeben werden können. Dabei kann lediglich die obere Plattform der übereinandergestapelten Plattformen beladen sein. Der Boden des Lagergebäudes bildet eine Ebene mit den zu ent- und beladenden LKWs, die jeweils vor einer entsprechenden Andockstation vor dem Lagergebäude positioniert sind.

Auf diese Weise kann eine einzige Übergabestation eine unbeladene und eine beladene Plattform speichern, ohne dass hierfür wesentlich mehr Platz benötigt wird als für eine Plattform. Somit ist es gegenüber dem Logistiksystem des Dokuments EP 1 808 387 A2 nicht erforderlich, aufwendige bauliche Veränderungen zur Aufnahme mehrere Plattformen in einem eigenen Lager vorzunehmen, sondern es kann ein vorhandenes Lagergebäude durch die einfache Montage des erfindungsgemäßen Logistiksystems auf dem Boden des Lagergebäudes umgerüstet werden. Dabei sind nur geringe Montagearbeiten vorzunehmen, was den Aufwand und die Kosten nach Arbeitszeit und Material gering hält im Vergleich zum Aufbau eines separaten mehrstöckigen Lagers mit entsprechenden Förderungseinrichtungen. Auch kommt das erfindungsgemäße Logistiksystem mit einfachen und wenigen mechanischen Führungselementen, Antrieben, Sensoren und Steuerungselementen aus, wodurch die Kosten der Anlage gering gehalten werden. Ferner kann die Übergabestation sehr platzsparend ausgeführt werden, da lediglich eine Grundfläche für die Übergabestation erforderlich ist, die im Wesentlichen der Grundfläche einer Plattform entspricht. Somit kann das erfindungsgemäße Logistiksystem einfach, kostengünstig und platzsparend umgesetzt werden.

Dennoch bietet das erfindungsgemäße Logistiksystem die Vorteile des Logistiksystem des Dokuments EP 1 808 387 A2, da es ebenfalls bei dem Be- und Entladen von LKWs mittels des erfindungsgemäßen Logistiksystems nicht mehr erforderlich ist, dass ein LKW mittels z.B. eines oder mehrerer Gabelstapler be- und/oder entladen wird, sondern das Be- und/oder Entladen der LKW mittels Plattformen in jeweils einem einzigen Arbeitsschritt vorgenommen werden kann, wodurch die Be- und Entladezeiten deutlich gesenkt und hierdurch Zeit und Kosten eingespart werden können.

Erfindungsgemäß wird eine beladende Plattform im Lagergebäude unabhängig von der Präsenz des entsprechenden LKWs beladen, so dass eine beladene Plattform an der Übergabestation bereitstehen kann, wenn der zu beladende LKW das Lager erreicht und vor der entsprechenden Andockstation anhält. Die bereits beladene Plattform kann in nur einem Arbeitsschritt an den LKW abgegeben werden, indem die beladene Plattform auf die Ladefläche des unbeladenen LKWs verfahren wird. Befindet sich auf der Ladefläche des LKWs bereits eine unbeladene Plattform, so kann diese von derselben Übergabestation dadurch aufgenommen werden, dass die beladene Plattform von der Übergabestation über die unbeladene Plattform auf der Ladefläche des LKWs hinüber gefahren wird, dann beide Plattformen übereinandergestapelt wieder von der Ladefläche des LKWs auf die Übergabestation verfahren werden und schließlich lediglich die obere, beladene Plattform an den unbeladenen LKW abgegeben wird. Auch kann eine beladene Plattform aus einem anliefernden LKW durch die Übergabestation in einem einzigen Arbeitsschritt aufgenommen werden, wenn in der Übergabestation keine beladenen Plattform vorhanden ist, so dass die Plattform an der Übergabestation entladen werden kann, nachdem der LKW die entsprechende Andockstation bereits wieder verlassen hat. Dabei kann entsprechend den obigen Erläuterungen auch eine unbeladene Plattform an den anliefernden LKW abgegeben werden, indem ebenfalls die beladenen und die unbeladene Plattform übereinandergestapelt verfahren werden.

Das erfindungsgemäße Verfahren zum Beladen von Fahrzeugen zeichnet sich dabei dadurch aus, dass zunächst ein Fahrzeug mit einer unbeladenen Plattform vor einer Übergabestation so positioniert wird, dass Plattformen in Beförderungsrichtung von der Übergabestation zu dem Fahrzeug und bzw. oder von dem Fahrzeug zu der Übergabestation beförderbar sind. Dann wird eine beladene Plattform von der Übergabestation über die unbeladene Plattform des Fahrzeugs befördert. Als nächstes wird die unbeladene Plattform zusammen mit der beladenen Plattform von dem Fahrzeug zu der Übergabestation befördert. Schließlich wird die beladene Plattform zu dem Fahrzeug befördert und die unbeladene Plattform verbleibt in der Übergabestation.

Hierdurch kann in einem Vorgang eine beladene Plattform von einem LKW zu einer Übergabestation entladen und gleichzeitig eine unbeladene Plattform an den LKW abgegeben werden, ohne dass hierfür die Ladefläche des LKW betreten oder mit einem Gabelstapler befahren werden muss. Die Verwendung einer Plattform ermöglicht dabei, Waren auf der Plattform zu kommissionieren, ohne dass hierfür die Präsenz eines LKWs erforderlich ist. Hierdurch kann die Standzeit des LKW vor dem Lagergebäude deutlich reduziert und hierdurch Kosten gespart werden, da der LKW lediglich zur Aufnahme der vollständig kommissionierten Plattform vor dem Lagergebäude positioniert werden muss. Auch steigt die Flexibilität der gesamten Logistikkette durch die Verwendung des erfindungsgemäßen Logistiksystems erheblich, da nicht einzelne Waren auf die LKWs verladen werden, sondern lediglich eine Plattform auf die leere Ladefläche eines LKWs verschoben wird.

Das erfindungsgemäße Verfahren zum Beladen ermöglicht es ferner, eine beladene Plattform mit einer unbeladenen Plattform auszutauschen, ohne dass hierfür aufwendige Rangiervorgänge oder Abstellflächen zum Lagern einer Plattform erforderlich sind. Vielmehr kommt das erfindungsgemäße Verfahren im Wesentlichen mit dem Platz auf dem Boden des Lagergebäudes aus, der für eine Plattform erforderlich ist. So kann das erfindungsgemäße Verfahren platzsparend umgesetzt werden.

Ferner ist zu beachten, dass die Ladefläche eines LKWs lediglich von Hinten, von Oben oder von der Seite beladen werden kann. Dahingegen bietet das erfindungsgemäße Logistiksystem die Möglichkeit, die Plattform in der Aufnahme der Übergabestation gleichzeitig von beiden Seiten, von Oben und von Hinten zu beladen. Hierdurch wird das Kommissionieren der Plattform erheblich beschleunigt, da gleichzeitig mehrere Zugangsmöglichkeiten zu der Plattform vorhanden sind und so mehrere Personen, Gabelstapler oder auch Kräne und andere Transportvorrichtungen die Plattform beladen können. Ferner wird die Reihenfolge der Kommissionierung der einzelnen Waren nicht durch den Zugang zu der Ladefläche des LKWs vorgegeben, der z.B. lediglich von Hinten möglich ist, wodurch der Zugang zu im Inneren der Ladefläche des LKWs kommissionierten Waren durch die davorstehenden Waren versperrt wird, sondern es ist jederzeit ein Zugriff auf alle Waren möglich, um z.B. die Kommissionierung einer Plattform flexibel ändern zu können. Hierdurch ist es auch denkbar, dass eine Plattform in ein Lagergebäude angeliefert wird, lediglich ein Teil der Waren an einer beliebigen zugänglichen Position der Plattform entnommen, ausgetauscht oder ergänzt wird, und dann die Plattform wieder an den LKW oder einen anderen LKW übergeben wird. Hierdurch ermöglicht das erfindungsgemäße Logistiksystem eine weitaus größere Flexibilität als herkömmliche Logistiksysteme.

Auch kann die Anordnung der Waren auf der Plattform überprüft und gesichert werden, bevor die Plattform auf den LKW verladen wird. Dies ist direkt auf der Ladefläche eines LKWs nicht bzw. nur eingeschränkt und aufwendig möglich, da nicht alle Waren frei einsehbar und zugänglich sind, wenn sie durch andere Waren verdeckt oder versperrt sind. Da die kommissionierte Plattform in der Übergabestation von allen Seiten frei zugänglich und einsehbar ist, kann hierdurch während des Kommissionierens sowie die vollständig kommissionierte Plattform jederzeit geprüft und gegebenenfalls gesichert werden, sodass durch das erfindungsgemäße Logistiksystem eine höhere Sicherheit der kommissionierten Waren als herkömmliche Logistiksysteme gewährleistet wird.

Das erfindungsgemäße Verfahren zum Entladen von Fahrzeugen zeichnet sich dabei dadurch aus, dass ein Fahrzeug mit einer unbeladenen Plattform vor einer Übergabestation so positioniert wird, dass Plattformen in Beförderungsrichtung von der Übergabestation zu dem Fahrzeug und bzw. oder von dem Fahrzeug zu der Übergabestation beförderbar sind. Dann wird eine beladene Plattform von dem Fahrzeug über die unbeladene Plattform der Übergabestation befördert. Als nächstes wird die unbeladene Plattform zusammen mit der beladenen Plattform von der Übergabestation zu dem Fahrzeug befördert. Schließlich wird die beladene Plattform zu der Übergabestation befördert und die unbeladene Plattform verbleibt in dem Fahrzeug.

Hierdurch kann in einem Vorgang eine beladene Plattform von einer Übergabestation zu einem LKW entladen und gleichzeitig eine unbeladene Plattform an die Übergabestation abgegeben werden. Für das Verfahren des Entladens eines Fahrzeugs gelten dabei die gleichen Vorteile des obigen Verfahrens des Beladens eines Fahrzeugs.

Dabei zeichnen sich das Verfahren zum Beladen von Fahrzeugen und das Verfahren zum Entladen von Fahrzeugen dadurch aus, dass die Ausmaße der Plattform an denen der Ladefläche des Fahrzeugs angepasst sind.

Hierdurch es möglich, den Raum der Ladefläche eines LKWs möglichst vollständig auszunutzen, da auf eine Plattform ebenso viele Waren kommissioniert werden können wie in dem Laderaum eines LKWs. Auf diese Weise können die oben genannten Vorteile des erfindungsgemäßen Logistiksystems erreicht werden, ohne hierdurch die Menge der zu transportierenden Waren einzuschränken.

Das erfindungsgemäße Logistiksystem betrifft die Übergabe einer Plattform in deren Beförderungsrichtung zu einem Fahrzeug und bzw. oder zur Übernahme einer Plattform von einem Fahrzeug. Dabei sind die Ausmaße der Plattform an denen der Ladefläche des Fahrzeugs angepasst. Das Logistiksystem weist eine Übergabestation für die Plattform auf, um die Plattform in Beförderungsrichtung von dem Fahrzeug zu übernehmen oder dorthin zu übergeben. Hierbei weist die Übergabestation eine Aufnahme auf, auf der die Plattform zur Anlage kommt und von der die Plattform in Beförderungsrichtung zu dem Fahrzeug und bzw. oder von dem Fahrzeug beförderbar ist. Ferner weist die Übergabestation eine Längsvorschubeinheit auf, um eine Plattform in Beförderungsrichtung zu bewegen. Das erfindungsgemäße Logistiksystem zeichnet sich dabei dadurch aus, dass die Längsvorschubeinheit dazu ausgebildet ist, zwei Plattformen vertikal übereinander aufzunehmen. Ferner ist die Längsvorschubeinheit dazu ausgebildet, wahlweise die zwei Plattformen in Beförderungsrichtung zu dem Fahrzeug und bzw. oder von dem Fahrzeug zu bewegen oder die obere Plattform über die untere Plattform in Beförderungsrichtung zu dem Fahrzeug und bzw. oder von dem Fahrzeug zu bewegen.

Die Übergabestation des erfindungsgemäßen Logistiksystem kann zur Umsetzung des erfindungsgemäßen Verfahrens zum Beladen eines Fahrzeugs sowie des erfindungsgemäßen Verfahrens zum Entladen eines Fahrzeugs verwendet werden, um die oben genannten Vorteile dieser beiden Verfahren bereitzustellen. Dabei dient die Längsvorschubeinheit dazu, die Verfahrbewegungen in der Beförderungsrichtung der einzelnen Schritte des jeweiligen Verfahrens durchzuführen. Dies bedeutet, dass die Längsvorschubeinheit in der Lage ist, sowohl eine beladene Plattform, eine unbeladene Plattform als auch beide Plattformen übereinander gemeinsam sowohl vollständig in den LKW hineinzuschieben als auch vollständig aus dem LKW herauszuziehen. Hierzu ist es erforderlich, dass die Längsvorschubeinheit so verfahren werden kann, dass entweder die untere Plattform, alleine oder mit der darauf befindlichen oberen Plattform, oder lediglich die obere Plattform in den LKW geschoben oder aus dem LKW herausgezogen werden kann. Dabei kann die untere Plattform in der Aufnahme oder auf der Ladefläche des LKWs gehalten werden, um zu verhindert, dass bei einem Herausziehen oder Hineinschieben der oberen Plattform die untere Plattform mit bewegt wird.

Gemäß einem weiteren Aspekt des erfindungsgemäßen Logistiksystems zeichnet sich die Übergabestation dadurch aus, dass die Längsvorschubeinheit in der Höhe vertikal zu den Plattformen so verfahren werden kann, dass die Längsvorschubeinheit entweder auf die Höhe der oberen Plattform oder auf die Höhe der unteren Plattform verfahren werden kann.

Hierzu wird die Höhe, in der die Längsvorschubeinheit sich bewegt, entsprechend dahingehend verstellt, sodass die Längsvorschubeinheit in einer unteren Höhe die untere Plattform schiebt oder zieht oder in einer oberen Höhe lediglich die obere Plattform schiebt oder zieht bzw. über die untere Plattform hinweg verfährt, ohne die untere Plattform zu schieben oder zu ziehen. Sind die beiden Plattformen übereinander gestapelt, so schiebt oder zieht die Längsvorschubeinheit in der unteren Höhe beide Plattformen.

Gemäß einem weiteren Aspekt des erfindungsgemäßen Logistiksystems zeichnet sich die Übergabestation dadurch aus, dass die Übergabestation eine Hubeinheit aufweist, um eine Plattform oder zwei übereinandergestapelte Plattformen in Hubrichtung anzuheben.

Hierdurch wird die Höhe, auf der die beladene oder unbeladene Plattform von der Aufnahme der Übergabestation über die unbeladene Plattform auf der Ladefläche des LKWs verfahren wird, eingestellt, da zwei Plattformen, die sich auf gleicher Höhe befinden, nicht übereinander gestapelt werden können, ohne eine der beiden Plattformen gegenüber der anderen anzuheben. Ferner kann die Hubeinheit dazu genutzt werden, die obere Plattform auf der Ladefläche des Fahrzeugs oder auf der Aufnahme anzulegen, nachdem die obere Plattform vollständig über die Maße der unteren Plattform hinweg befördert wurde.

Gemäß einem weiteren Aspekt des erfindungsgemäßen Logistiksystems zeichnet sich die Übergabestation dadurch aus, dass die Übergabestation in der Richtung quer zur Beförderungsrichtung verschiebbar ist.

Hierdurch kann die Übergabestation gegenüber einem vor dem Lagergebäude positionierten LKW ausgerichtet und verschoben werden, damit die Plattform, die an die Maße der Ladefläche des LKWs angepasst ist, von dem LKW übernommen oder an den LKW übergeben werden kann. Hierzu ist es erforderlich, dass die Positionierung und Ausrichtung von Übergabestation und Ladefläche des LKWs möglichst exakt aufeinander abgestimmt sind, um eine Verkanten der Plattform während des Ent- und Beladens zu vermeiden. Wird die Positionierung und Ausrichtung zueinander von der Übergabestation anstelle des LKWs übernommen, können aufwendige Rangiermanöver des LKWs vermieden und hierdurch Zeit gespart werden, da die Positionierung und Ausrichtung einfacher und schneller durch die Übergabestation durchgeführt werden kann als durch ein erneutes Verfahren und Positionieren des LKWs.

Die vorliegende Erfindung betrifft ferner ein Logistiksystem zur Übergabe einer Plattform in deren Beförderungsrichtung zu einem Fahrzeug und bzw. oder zur Übernahme einer Plattform von einem Fahrzeug, dass sich dadurch auszeichnet, dass die Übergabestation von einem Gabelstapler aufgenommen werden kann.

Hierdurch kann das erfindungsgemäße Logistiksystem auch angewendet werden auf LKW, die nicht vor einem Lagergebäude positioniert werden, weil entweder alle Andockstationen durch andere LKW belegt sind oder auch weil das erfindungsgemäße Logistiksystem lediglich in dieser mobilen Variante ausgeführt verwendet wird. Dabei können die oben genannten Vorteile des erfindungsgemäßen Logistiksystems auch in dieser Variante genutzt werden, da ebenfalls eine Kommissionierung der Plattform ohne die Präsenz eines LKWs im Lagergebäude möglich ist. Von dort wird eine kommissionierte Plattform von der Übergabestation des Gabelstaplers ebenso aufgenommen, wie diese in der oben beschriebenen Variante bei der Übergabe an den LKW direkt der Fall ist, d.h. der Gabelstapler positioniert die von ihm aufgenommene Übergabestation so zu der aufzunehmenden Plattform, dass diese von dem Kommissionierplatz des Lagergebäudes in die Aufnahme der Übergabestation des Gabelstaplers übernommen werden kann. Dann fährt der Gabelstapler zu dem LKW, der die beladene Plattform übernehmen soll. Dabei ist es erforderlich, dass die Ladefläche des LKWs keine Plattform aufweist, d. h. eine beladene oder unbeladene Plattform ist von dem LKW z.B. durch einen zweiten Gabelstapler mit Übergabestation bereits vorher zu entnehmen, oder es kann auch durch den Gabelstapler eine weitere Plattform auf eine bereits auf der Ladefläche des LKWs vorhandene unbeladene Plattform geschoben werden. Die beladene Plattform wird von der Übergabestation des Gabelstaplers auf die Ladefläche des LKWs abgegeben nachdem sich der Gabelstapler entsprechend zu dem LKW positioniert und ausgerichtet hat. Dabei wird im Allgemeinen das Aufnehmen und Übergeben der Plattform auf bzw. von der Übergabestation des Gabelstaplers in Richtung der Längsseite der Plattform und damit zur Seite des LKW quer zur Fahrtrichtung erfolgen, damit das Gewicht der Übergabestation mit der unbeladenen oder beladenen Plattform von dem Gabelstapler aufgenommen werden kann. Nichtsdestotrotz ist es auch möglich, die Übergabe und Übernahme der Plattformen in Längsrichtung des LKWs, d.h. in dessen Fahrtrichtung, durchzuführen, wenn die sich hierdurch ergebende Belastung von dem Gabelstapler aufgenommen werden kann.

Gemäß einem weiteren Aspekt des erfindungsgemäßen Logistiksystems zeichnet sich die Übergabestation dadurch aus, dass die Übergabestation Gabelöffnungen aufweist, in die die Gabeln eines Gabelstaplers eingreifen können, um so die Übergabestation aufzunehmen.

Durch diese Gabelöffnungen ist es möglich, eine einfache und kostengünstige Halterung an der Übergabestation vorzusehen, so dass diese von jedem beliebigen Gabelstapler aufgenommen werden kann, ohne konstruktive Veränderungen an dem Gabelstapler, insbesondere an den Gabeln des Gabelstaplers, vornehmen zu müssen. Hierdurch ist die Anwendbarkeit dieser Übergabestation durch übliche Gabelstapler gewährleitet.

Gemäß einem weiteren Aspekt des erfindungsgemäßen Logistiksystems zeichnet sich die Übergabestation dadurch aus, dass die Übergabestation an den beiden Seiten der Aufnahme in Beförderungsrichtung jeweils eine Vorschubeinheit aufweist, um die Plattform in Beförderungsrichtung zu dem Fahrzeug und bzw. oder von dem Fahrzeug zu bewegen.

Auf diese Weise ist es möglich, die Plattform von der Übergabestation abzugeben oder durch die Übergabestation aufzunehmen und dabei eine gleichförmige Vorschubkraft auf die Plattform auszuüben. Hierdurch kann ein Verkanten der Plattform in der Bewegung vermieden werden, da an beiden Seiten der Plattform gleichzeitig die gleichen Vorschubkräfte aufgebracht werden können. Ferner wird hierdurch mit einfachen Antriebsmitteln die Bewegung der Plattform ermöglicht werden, da jeweils bekannte und weit verbreitete Antriebe in üblicher Weise verwendet werden.

Die vorliegende Erfindung betrifft ferner ein Logistiksystem zur Übergabe einer Plattform in deren Beförderungsrichtung zu einem Fahrzeug und bzw. oder zur Übernahme einer Plattform von einem Fahrzeug, wobei das Logistiksystem eine Übergabestation mit einer Aufnahme für mindestens eine Plattform aufweist, um eine Plattform in Beförderungsrichtung von dem Fahrzeug zu übernehmen oder dorthin zu übergeben. Dabei weist das Fahrzeug eine Laserstrahlquelle auf. Ferner weist die Übergabestation eine erste Markierungsaufnahme und eine zweite Markierungsaufnahme auf, wobei die erste Markierungsaufnahme derart ausgestaltet ist, dass der Laserstrahl der Laserstrahlquelle durch die erste Markierungsaufnahme hindurchtritt und auf die zweite Markierungsaufnahme auftrifft.

Gemäß einem weiteren Aspekt des erfindungsgemäßen Logistiksystems ist die Laserstrahlquelle an Rückseite oder Seitenfläche der Ladefläche des Fahrzeugs derart vorgesehen ist, dass der Laserstrahl der Laserstrahlquelle rechtwinklig zur Rückseite der Ladefläche des Fahrzeugs abgegeben wird. Hierdurch wird sichergestellt, dass der Laserstrahl zur Ausrichtung von Fahrzeugladefläche und Übergabestation in der Höhe, seitlich und Winkellage zueinander geeignet ist, um eine Übergabe von Plattformen zwischen Fahrzeug und Übergabestation zu ermöglichen. Da die Maße der Plattform den Maßen der Ladefläche des Fahrzeugs entsprechen, ist gerade eine möglichst exakte Ausrichtung um die Hochachse der Übergabestation von großer Bedeutung, da es sonst zu einem Verklemmen der Plattform während des Übergabevorgangs kommen kann.

Gemäß einem weiteren Aspekt des erfindungsgemäßen Logistiksystems weist die erste Markierungsaufnahme in horizontaler Richtung mehrere Höhenmarkierungen und in vertikaler Richtung mindestens eine Seitenmarkierung auf, die für den Laserstrahl der Laserstrahlquelle durchlässig sind, und die zweite Markierungsaufnahme ist für den Laserstrahl der Laserstrahlquelle undurchlässig.

Durch diese Anordnung von Laserstrahlquelle, erster und zweiter Markierungsaufnahme wird eine genaue Ausrichtung zwischen der Ladefläche des Fahrzeugs und der Aufnahme der Übergabestation auf einfache und kostengünstige Art und Weise ermöglicht. Dabei ist die Laserquelle an einer definierten Position hinsichtlich ihrer Höhe gegenüber der Ladefläche des Fahrzeugs sowie ihrer seitlichen Positionierung vorzusehen. Wird nun ein mit einer derartigen Laserquelle versehenes Fahrzeug rückwärts an eine Übergabestation herangefahren und grob positioniert und ausgerichtet vor der Übergabestation abgestellt, so kann nun die Feinpositionierung und -ausrichtung der Übergabestation gegenüber dem Fahrzeug mittels der beiden Markierungsaufnahmen der Übergabestation erfolgen. Um diese Positionierung und Ausrichtung vorzunehmen, sind entsprechende Antriebe und Führungen an der Übergabestation vorzusehen, die zumindest ein seitliches Verschieben der Übergabestation gegenüber dem Fahrzeug, eine Veränderung der Höhe der Aufnahme der Übergabestation sowie ein Schwenken der Übergabestation um ihre Hochachse ermöglichen. Dabei wird nun erfindungsgemäß der Laserstrahl auf die erste Markierungsaufnahme treffen. Die erste Markierungsaufnahme ist bis auf einige Markierungen undurchsichtig ausgebildet, sodass der Laserstrahl von der ersten Markierungsaufnahme absorbiert wird und dort einen Laserpunkt ausbildet - auf der zweiten Markierungsaufnahme ist kein Laserpunkt zu sehen. Nun kann die Übergabestation in der Höhe und zur Seite so verfahren werden, dass der Laserstrahl durch eine der Höhenmarkierung und die Seitenmarkierung der ersten Markierungsaufnahme hindurchtritt und auf der zweiten Markierungsaufnahme einen Laserpunkt ausbildet. Hierdurch kann die Übergabestation auf einfache Art und Weise in der Höhe ausgerichtet werden, da die verschiedenen Höhenmarkierungen der ersten Markierungsaufnahme verschiedene Höhen der Übergabestation gegenüber dem Fahrzeug markieren.

Gemäß einem weiteren Aspekt des erfindungsgemäßen Logistiksystems tritt der Laserstrahl der Laserstrahlquelle, wenn er durch eine der Höhenmarkierungen und bzw. oder eine Seitenmarkierung der ersten Markierungsaufnahme hindurchtritt, auf die zweite Markierungsaufnahme auf und bildet dort einen Laserpunkt ab. Ferner wird der Laserstrahl der Laserstrahlquelle, wenn er auf die erste Markierungsaufnahme auftritt ohne durch eine der Höhenmarkierungen und bzw. oder eine Seitenmarkierung der ersten Markierungsaufnahme hindurchzutreten, von der erste Markierungsaufnahme vollständig absorbiert. Hierdurch wird erreicht, daß auf der zweiten Markierungsaufnahme klar und deutlich unterschieden werden kann, ob der Laserstrahl durch eine der Höhen- und bzw. oder Seitenmarkierungen der ersten Markierungsaufnahme hindurchtritt oder nicht. Da die Ausrichtung der Übergabestation gegenüber dem Fahrzeug aufgrund dieses Laserstrahls erfolgt, ist es wichtig, dass dieser Laserstrahl bzw. der Laserpunkt, der auf der zweiten Markierungsaufnahme von dem Laserstrahl ausgebildet wird, klar und eindeutig vom Bediener, der den Ausrichtevorgang durchführt, wahrgenommen werden kann.

Gemäß einem weiteren Aspekt des erfindungsgemäßen Logistiksystems weist die erste Markierungsaufnahme in horizontaler Richtung drei Höhenmarkierungen auf, und der Abstand zwischen der unteren und der mittleren Höhenmarkierung sowie der Abstand zwischen der mittleren und der oberen Höhenmarkierung entspricht der Höhe einer Plattform. Dieser Abstand zwischen den Höhenmarkierungen der ersten Markierungsaufnahme trägt dem Umstand Rechnung, dass auf der Ladefläche des Fahrzeugs und in der Aufnahme der Übergabestation eine oder mehrere Plattformen übereinander angeordnet werden können, die einzeln oder mehrere übereinander zwischen Fahrzeug und Übergabestation übergeben werden. Da der Abstand der Höhenmarkierungen der Höhe dieser Plattformen entspricht, kann auch der Abstand zwischen Ladefläche des Fahrzeugs und Aufnahme der Übergabestation auf ein ganzzahliges vielfaches der Plattformhöhe eingestellt werden.

Gemäß einem weiteren Aspekt des erfindungsgemäßen Logistiksystems trifft der Laserstrahl der Laserstrahlquelle dann durch die mittlere Höhenmarkierung der ersten Markierungsaufnahme auf die zweite Markierungsaufnahme auf und bildet dort einen Laserpunkt ab, wenn sich die Ladefläche des Fahrzeugs und die Aufnahme der Übergabestation auf der gleichen Höhe befinden. Hierdurch wird eine Ausrichtung in der Höhe von Ladefläche des Fahrzeugs und Aufnahme der Übergabestation zueinander für den Fall auf einfache Art und Weise ermöglicht, dass eine Plattform zwischen Fahrzeug und Übergabestation übergeben werden soll, da jeweils eine weitere Markierung oberhalb und unterhalb der mittleren Markierung vorhanden ist, die um die Höhe einer Plattform von der mittleren Markierung verschoben ist.

Gemäß einem weiteren Aspekt des erfindungsgemäßen Logistiksystems weist die erste Markierungsaufnahme eine Seitenmarkierung und die zweite Markierungsaufnahme eine Seitenmarkierung auf. Dabei trifft der Laserstrahl der Laserstrahlquelle dann durch die Seitenmarkierung der ersten Markierungsaufnahme auf die Seitenmarkierung der zweiten Markierungsaufnahme auf und bildet dort einen Laserpunkt ab, wenn das Fahrzeug in der Flucht mit der Übergabestation ausgerichtet ist. Durch diese beiden Seitenmarkierungen, die mittels des Laserstrahls in Deckung zueinander zu bringen sind, um die Ladefläche des Fahrzeugs und die Aufnahme der Übergabestation in Verlängerung zueinander auszurichten, wird auf einfache Art und Weise die Ausrichtung mittels "Kimme und Korn" umgesetzt. So liegen nur dann Laserstrahlquelle an der Rückseite des Fahrzeugs, erste Seitenmarkierung der ersten Markierungsaufnahme und zweite Seitenmarkierung der zweiten Markierungsaufnahme in einer Linie zueinander, was an der Abbildung des Laserpunktes auf der Seitenmarkierung der zweiten Markierungsaufnahme leicht nachzuvollziehen ist, wenn die Ladefläche des Fahrzeugs und die Aufnahme der Übergabestation zueinander in Flucht ausgerichtet sind.

Gemäß einem weiteren Aspekt des erfindungsgemäßen Logistiksystems ist eine Seitenmarkierung der ersten Markierungsaufnahme derart ausgebildet, die Farbe des Laserstrahl der Laserstrahlquelle so zu verändern, dass der Laserpunkt, der von dem Laserstrahl der Laserstrahlquelle auf der zweiten Markierungsaufnahme ausgebildet wird, durch seine Farbe anzeigt, ob er durch eine Seitenmarkierung der ersten Markierungsaufnahme hindurchgetreten ist oder nicht. Durch diese farbige Kennzeichnung der Laserstrahl kann auf der zweiten Markierungsaufnahme einfach erkannt werden, ob der Laserstrahl durch eine der durchlässigen Höhenmarkierungen der ersten Markierungsaufnahme hindurchtritt oder ob der Laserstrahl durch eine Seitenmarkierung der ersten Markierungsaufnahme hindurchtritt. Hierdurch ist eine Unterscheidung dieser Markierungen durch die Farbe des Laserpunktes auf der zweiten Markierungsaufnahme auf einfache und sichere Art und Weise möglich.

Die vorliegende Erfindung betrifft ferner ein Logistiksystem zur Übergabe einer Plattform in deren Beförderungsrichtung zu einem Fahrzeug und bzw. oder zur Übernahme einer Plattform von einem Fahrzeug, wobei das Logistiksystem eine Übergabestation mit einer Aufnahme für mindestens eine Plattform aufweist, um eine Plattform in Beförderungsrichtung von dem Fahrzeug zu übernehmen oder dorthin zu übergeben. Die Plattform weist auf ihrer Oberseite mehrere Laufflächen und an ihrer Unterseite mehrere Räder auf, wobei die Laufflächen und die Räder derart übereinander angeordnet sind, dass die Räder einer Plattform auf den Laufflächen einer anderen Plattform laufen, wenn die eine Plattform über die andere Plattform befördert wird. Hierdurch ist die Plattform derart ausgebildet, dass Beschädigungen und Abnutzungen der Oberfläche der Plattform, auf der die zu befördernde Fracht kommissioniert wird, dahingehend vermieden bzw. zumindest reduziert wird, dass die Oberfläche der Plattform nicht durch die Laufrollen bzw. Räder einer weiteren Plattform beschädigt oder abgenutzt wird, wenn zwei Plattformen übereinander befördert werden. Die Oberfläche einer Plattform wird im Allgemeinen vollständig aus einem Material wie z.B. Holz gefertigt. Wird nun eine Plattform über eine weitere Plattform befördert, kann es auf der hölzernen Oberfläche der unteren Plattform durch die Räder bzw. Laufrollen der oberen Plattform zu Abrieb kommen, sowohl der hölzernen Oberfläche als auch der Laufrollen, welche im Allgemeinen aus einem Material wie Kunststoff oder Gummi gefertigt werden. Hierdurch kommt es zu Verschleiß an der Oberfläche sowie an den Laufrollen, welche entsprechend erneuert werden müssen. Auch kann sich aufgrund des Verschleißes der Kraftaufwand für die Bewegung der Plattformen erhöhen. Ferner kann auch die hölzerne Oberfläche der Plattform durch das Kommissionieren durch z.B. einen Gabelstapler oder ähnliche Geräte beschädigt oder abgenutzt werden, so dass in dem Bereich, über den die Laufrollen einer anderen Plattform laufen, Holzteile ausbrechen können und Vertiefungen bilden oder auch Holzteile nach Oben hervorstehen und hierdurch Hindernisse darstellen. In beiden Fällen wird durch die Unebenheit der hölzernen Oberfläche die Bewegung einer Plattform über eine andere erschwert. Daher ist es vorteilhaft, diesen Bereich der Plattformen, über den die Laufrollen einer anderen Plattformen laufen, aus einem Material vorzusehen, dass weniger beschädigt werden kann und sich weniger abnutzt, um den Verschleiß der Laufflächen und Laufrollen zu verringern und sicherzustellen, dass durch die Abnutzung oder Beschädigung der Oberfläche der Plattform keine Behinderungen der Beförderungsbewegung entsteht.

Gemäß einem weiteren Aspekt des erfindungsgemäßen Logistiksystems sind an den seitlichen Außenkanten der Plattform Zurrpunkte zum Sichern der Fracht vorgesehen. Ferner sind zusätzlich oder alternativ in den Laufflächen Zurrpunkte zum Sichern der Fracht vorgesehen. Auch sind zusätzlich oder alternativ an den Stirnkanten der Plattform Aussparungen zur Aufnahme einer Plattformsicherung vorgesehen. Durch diese Zurrpunkte können an der Plattform Befestigungsmittel auf platzsparende Art und Weise angebracht werden, um die Fracht in Beförderungsrichtung und in Querrichtung durch z.B. Spanngurte zu sichern. Ferner dienen die Aussparungen der Sicherung der Plattform auf der Ladefläche des Fahrzeugs.

Gemäß einem weiteren Aspekt des erfindungsgemäßen Logistiksystems sind die Räder in entsprechenden Radkästen auf der Unterseite der Plattform in die Plattform eingelassen vorgesehen, und pro Radkasten sind zwei Räder vorgesehen, die in Beförderungsrichtung nebeneinander angeordnet sind. Dadurch, dass zwei Räder statt lediglich einem Rad pro Radkasten vorgesehen sind, kann der Durchmesser jedes Rades bzw. jeder Laufrolle weiter verringert werden, so dass die Höhe der Plattform, die im Wesentlichen durch den Durchmesser der Räder bzw. Laufrollen bestimmt wird, ebenfalls entsprechend verringert werden kann und dennoch die gleiche Last von der Gesamtheit der Räder aufgenommen werden kann. Ferner können hierdurch mehr Räder bzw. Laufrollen an der Unterseite der Plattform vorgesehen werden, die entsprechend einen geringeren Abstand zueinander aufweisen. Hierdurch liegen auch die Kontaktpunkte der Plattform mit dem Untergrund, also die Kontaktpunkte der Räder bzw. Laufrollen, dichter bei einander, so dass bei der Übergabe von der Aufnahme der Übergabestation zur Ladefläche des Fahrzeugs schneller die Gewichtskraft der Plattform und Fracht durch mehrere Räder übergeben wird. Hierdurch wird die Belastung für die einzelnen Räder bzw. Laufrollen reduziert.

Die vorliegende Erfindung betrifft ferner ein Logistiksystem zur Übergabe einer Plattform in deren Beförderungsrichtung zu einem Fahrzeug und bzw. oder zur Übernahme einer Plattform von einem Fahrzeug, wobei das Logistiksystem eine Übergabestation mit einer Aufnahme für mindestens eine Plattform aufweist, um eine Plattform in Beförderungsrichtung von dem Fahrzeug zu übernehmen oder dorthin zu übergeben. Dabei weist die Übergabestation an beiden Seiten der Aufnahme Führungen auf, und bzw. oder die Übergabestation weist eine Arretierung zum Arretieren einer in der Aufnahme befindlichen Plattform auf.

Mittels einer derart ausgestalteten Übergabestation kann die eine Plattform oder auch die mehreren Plattformen, die von dem Fahrzeug an die Übergabestation übergeben werden, seitlich geführt werden, um sicher zu stellen, dass die eine Plattform oder auch die mehreren Plattformen genau positioniert und ausgerichtet in der Aufnahme aufgenommen werden, um die Plattform oder die Plattformen auch wieder von der Aufnahme zu dem Fahrzeug übergeben zu können, ohne dass sich die Plattformen in der Aufnahme oder der Ladefläche des Fahrzeugs verkanten, verklemmen oder an die Seiten der Ladefläche des Fahrzeugs anstoßen. Hierdurch kann ein fehlerfreier und damit zügiger Umladevorgang einer oder mehrere Plattformen gewährleistet werden.

Gemäß einem weiteren Aspekt des erfindungsgemäßen Logistiksystems weisen die Führungen der Aufnahme Führungsleisten auf, und die Führungsleisten sind aus Kunststoff oder Hartplastik ausgebildet. Hierdurch wird vermieden, dass Metall, z.B. der Rahmen der Plattform, auf Metall, z.B. die Führungen, auftrifft, sondern der Rahmen der Plattform wird gegen ein weiches Material geführt, sodass kein metallischer Abrieb oder Beschädigungen des Rahmens der Plattform entstehen. Durch den Kunststoff oder das Hartplastik, welches beides weit verbreitete Materialien zur reibungsarmen Führung von beweglichen Bauteilen gegeneinander sind, wird eine sichere und reibungsarme Führung der Plattform in der Aufnahme sichergestellt.

Gemäß einem weiteren Aspekt des erfindungsgemäßen Logistiksystems ist die Arretierung der Aufnahme derart ausgebildet, die untere Plattform in der Aufnahme zu arretieren, falls mehrere Plattformen übereinander mittels der Übergabestation befördert werden. Die Arretierung der Übergabestation sorgt hierdurch dafür, dass die untere Plattform in der Aufnahme verbleibt und sich nicht aus der Aufnahme zu dem Fahrzeug hin mit bewegt, falls mehrere Plattformen übereinander in der Aufnahme vorhanden sind und lediglich die obere Plattform, d.h. alle Plattformen außer der unteren, aus der Aufnahme zu dem Fahrzeug hin befördert werden soll. Hierdurch kann ein zuverlässiger Austausch von mehrere Plattformen mittels lediglich einer Aufnahme der Übergabestation sichergestellt werden.

Die Erfindung ist nachfolgend anhand von Ausführungsbeispielen näher erläutert.

**Figur 1** zeigt eine schematische Prinzipskizze eines Logistiksystems mit einer Übergabestation 20 gemäß einem ersten Ausführungsbeispiel der vorliegenden Erfindung. Dabei zeigt die schematische Prinzipskizze der Figur 1 eine Ansicht von schräg oben von außerhalb eines Lagergebäudes, vor dem ein LKW 3 (siehe z.B. Figur 7) zu positionieren ist. Die Übergabestation 20 des ersten Ausführungsbeispiels weist eine Aufnahme 21 auf, die zwei Plattformen 10a und 10b in Hubrichtung C übereinander aufnehmen kann. Über der Aufnahme 21 kann eine Längsvorschubeinheit 31 in Längsrichtung A verfahren, um hierbei eine der beiden Plattformen 10a und 10b oder auch beide übereinander gestapelte Plattformen 10a und 10b zu einem LKW 3 hin bzw. von einem LKW 3 weg zu verfahren. Die Aufnahme 21 selbst kann in der Richtung B quer zur Längsrichtung A verfahren, um sich so gegenüber dem LKW 3 zu positionieren und auszurichten.

Die Übergabestation 20 weist ferner eine Hubeinheit 32 auf, die in Hubrichtung C vertikal zur Ebene der Übergabestation 20 verfahren kann. Mittels dieser Hubeinheit 32 kann eine Plattform 10b derart angehoben werden, dass sie über die andere Plattform 10a hinüber verfahren werden kann. Dies ist erforderlich, um zwei Plattform 10a und 10b, die sich auf gleicher Höbe jeweils in der Aufnahme 21 und auf der Ladefläche des LKW 3 befinden, übereinander stapeln zu können.

**Figur 2** zeigt eine schematische Prinzipskizze eines Logistiksystems mit einer Übergabestation 20 gemäß des ersten Ausführungsbeispiels der vorliegenden Erfindung in einer Ansicht von schräg oben von innerhalb eines Lagergebäudes.

**Figur 3** zeigt eine schematische Prinzipskizze eines Logistiksystems mit einer Übergabestation 20 gemäß des ersten Ausführungsbeispiels der vorliegenden Erfindung in einer ebenen Ansicht innerhalb eines Lagergebäudes. Die Figur 3 zeigt dabei eine Aufnahme 21, in der keine Plattformen 10a und 10b vorhanden ist.

**Figur 4** zeigt eine schematische Prinzipskizze einer Detailansicht der Längsvorschubeinheit 31 der Übergabestation 20 gemäß des ersten Ausführungsbeispiels der vorliegenden Erfindung.

**Figur 5** zeigt eine schematische Prinzipskizze einer Detailansicht der Hubeinheit 32 der Übergabestation 20 gemäß des ersten Ausführungsbeispiels der vorliegenden Erfindung. Dabei wird die Übergabestation 20 von außerhalb eines Lagergebäudes gezeigt.

**Figur 6** zeigt eine schematische Prinzipskizze einer Detailansicht der Übergabestation 20 gemäß des ersten Ausführungsbeispiels der vorliegenden Erfindung. Dabei wird die Übergabestation 20 von innerhalb eines Lagergebäudes gezeigt.

**Figur 7** zeigt eine schematische Prinzipskizze eines ersten Schritts des Beladens eines LKWs 3 mittels eines Logistiksystems mit einer Übergabestation 20 gemäß des ersten Ausführungsbeispiels der vorliegenden Erfindung. In diesem Schritt ist ein LKW 3 vor einer Andockstation eines Lagergebäudes gegenüber der Übergabestation 20 so positioniert und ausgerichtet, dass zwischen der Ladefläche des LKWs 3 und der Aufnahme 21 der Übergabestation 20 Plattformen 10a und 10b ausgetauscht werden können. Dabei befindet sich eine unbeladene Plattform 10a auf der Ladefläche des LKWs 3 und eine beladene Plattform 10b in der Aufnahme 21 der Übergabestation 20. Um die beladene Plattform 10b nun in den LKW 3 über die dort befindliche unbeladene Plattform 10a zu schieben, ist die Längsvorschubeinheit 31 auf der Höhe C der beladenen Plattform 10b an der dem Inneren des Lagergebäudes zugewandten Seite der beladenen Plattform 10b positioniert, so dass die Längsvorschubeinheit 31 die beladenen Plattform 10b aus der Aufnahme 21 in Längsrichtung A zu dem LKW 3 verfahren kann.

Die Ladefläche des LKW 3 und die Ebene der Übergabestation 20 befinden sich auf einer Höhe C, so dass sich auch die beiden Plattformen 10a und 10b auf dem LKW 3 und in der Aufnahme 21 auf gleicher Höhe C befinden. Um nun die eine Plattform 10b über die andere Plattform 10a verschieben zu können, muss die erste Plattform 10b gegenüber der anderen Plattform 10a angehoben werden. Dies geschieht durch die Hubeinheit 32, indem bei dem Beladen die beladene Plattform 10b von der Längsvorschubeinheit 31 aus der Aufnahme 21 zunächst soweit herausgeschoben wird, bis sich die beladenen Plattform 10b über der Hubeinheit 32 befindet. Dann hebt die Hubeinheit 32 die beladene Plattform 10b soweit an, dass die beladene Plattform 10b über die unbeladene Plattform 10a im LKW 3 geschoben werden kann, siehe **Figur 8****.** Hierbei kann es erforderlich sein, die Höhe C der Längsvorschubeinheit 31 mit der Vorschubbewegung in Längsrichtung A anzuheben, da sich die beladene Plattform 10b und die unbeladene Plattform 10a am Anfang der Vorschubbewegung auf einer Höhe C befinden, durch das Anheben der beladenen Plattform 10b durch die Hubeinheit 32 allerdings am Ende der Vorschubbewegung sich die beladene Plattform 10b über der unbeladenen Plattform 10a befindet. Somit entspricht die Höhe C der Längsvorschubeinheit 31 am Ende der Vorschubbewegung der Höhe C der oberen Plattform 10b.

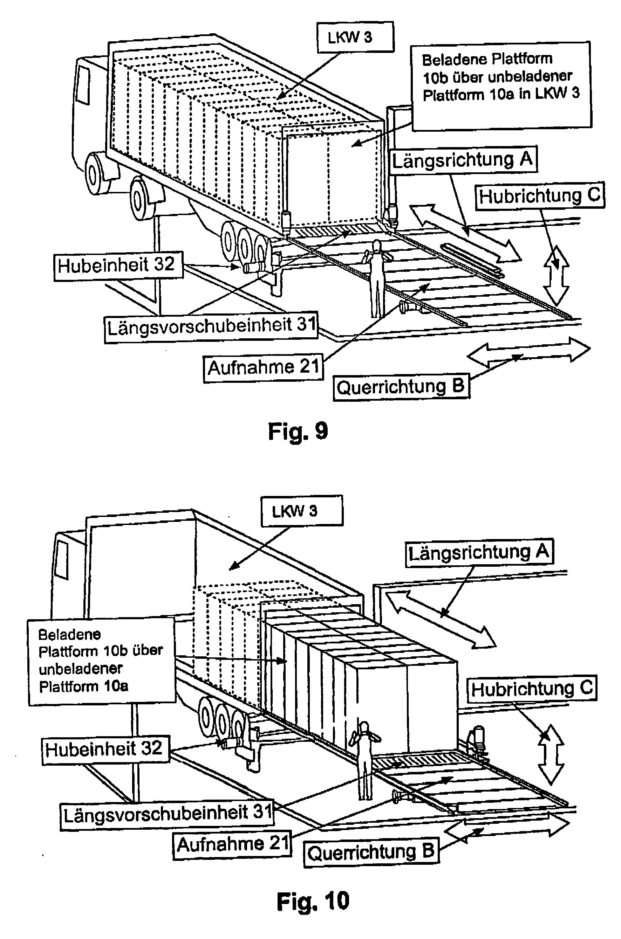

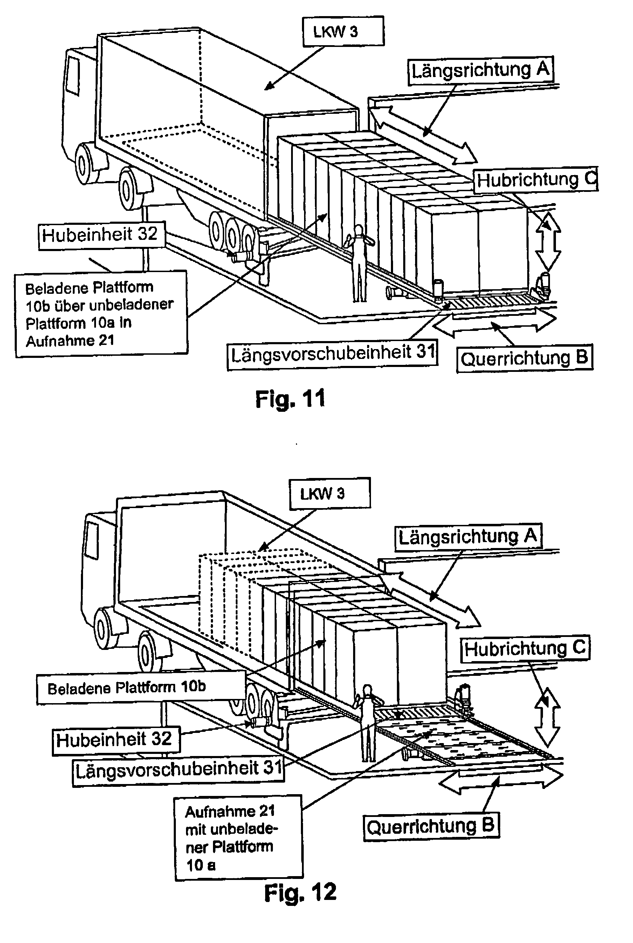

Die beladenen Plattform 10b wird nun vollständig über die unbeladene Plattform 10a auf die Ladefläche des LKWs 3 geschoben, siehe **Figur 9****.** Sind beide Plattformen 10a und 10b vollständig übereinander gestapelt, wird die Längsvorschubeinheit 31 von der oberen, beladenen Plattform 10b gelöst und die Hubeinheit 32 nach unten eingefahren. Nun wird die Längsvorschubeinheit 31 von der Höhe C der oberen, beladenen Plattform 10b auf die Höhe C der unteren, unbeladenen Plattform 10a heruntergefahren und mit der unteren, unbeladenen Plattform 10a verbunden. Da sich die unteren, unbeladenen Plattform 10a mit der nun leeren Aufnahme 21 auf einer Höhe C befindet, können die beiden übereinander gestapelten Plattformen 10a und 10b von der Längsvorschubeinheit 31 in Längsrichtung A von der Ladefläche des LKWs 3 in die Aufnahme 21 gezogen werden, siehe Figur 3. Am Ende dieser Ausziehbewegung befinden sich die beiden Plattformen 10a und 10b übereinander gestapelt vollständig in der Aufnahme 21 der Übergabestation 20, siehe **Figur 11****.**

Nun wird die Längsvorschubeinheit 31 von der unteren, unbeladenen Plattform 10a gelöst und auf die Höhe C der oberen, beladenen Plattform 10b angehoben. Die Längsvorschubeinheit 31 verfährt nun die obere, beladene Plattform 10b in Längsrichtung A auf die Ladefläche des LKWs 3, siehe **Figur 12****.** Gegebenenfalls wird dabei die untere, unbeladene Plattform 10a in der Aufnahme 21 gehalten, um nicht von der oberen, beladenen Plattform 10b aufgrund deren Vorschubbewegung mit in Längsrichtung A verfahren zu werden.

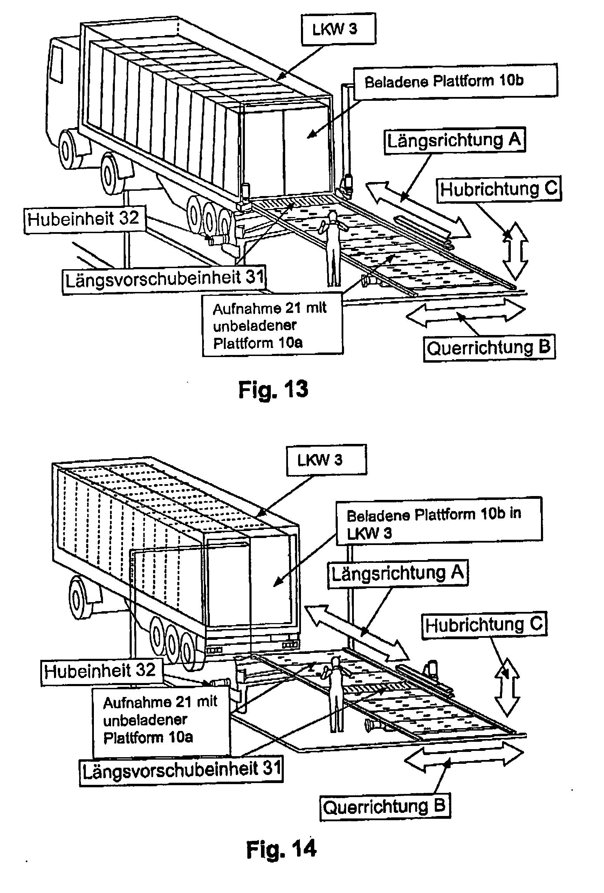

Die obere, beladene Plattform 10b wird vollständig von der Längsvorschubeinheit 31 auf die Ladefläche des LKWs 3 verfahren, siehe **Figur 13****.** Dabei kann es z.B. an Ende der Vorschubbewegung erforderlich sein, die Hubeinheit 32 unter die beladene Plattform 10b auszufahren, um so die obere, beladene Plattform 10b anzuheben oder zu stützen, damit die obere, beladene Plattform 10b nicht beim Verlassen der unteren, unbeladenen Plattform 10a auf die Ladefläche des LKWs 3 herunter fällt, sondern, nachdem die obere, beladene Plattform 10b über die untere, unbeladene Plattform 10a hinausgeschoben wurde, die obere, beladenen Plattform 10b auf die Ladefläche des LKWs 3 durch Einfahren der Hubeinheit 32 abzusetzen. Die Höhe C der Längsvorschubeinheit 31 ist dabei der Höhe C der oberen, beladenen Plattform 10b entsprechend anzupassen. Hierdurch kann eine Beschädigung der beiden Plattformen 10a und 10b, des LKWs 3 und seiner Ladefläche sowie eine Beschädigung und ein Verrutschen der Ladung auf der oberen, beladenen Plattform 10b verhindert werden.

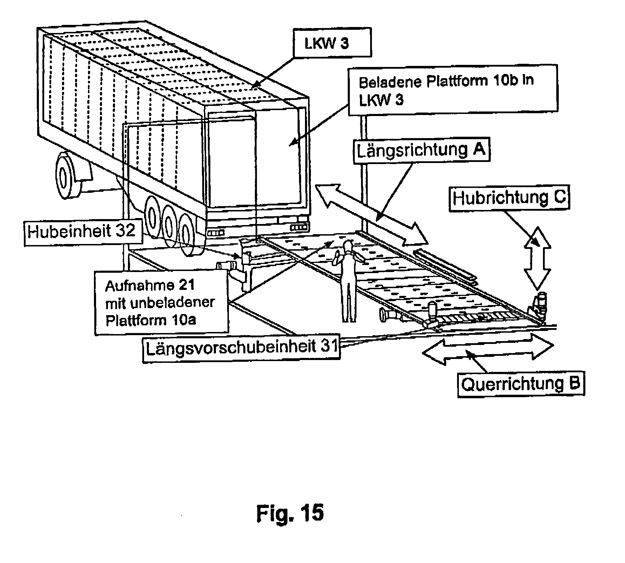

Ist die obere, beladene Plattform 10b vollständig auf die Ladefläche des LKWs 3 geschoben und dort abgesetzt worden, wird die Längsvorschubeinheit 31 von der beladenen Plattform 10b wegverfahren, um den LKW 3 freizugeben. Der Beladevorgang ist damit abgeschlossen und die beladene Plattform 10b kann gegebenenfalls auf der Ladefläche des LKWs 3 gesichert werden, bevor der LKW 3 seine Position vor der Andockstation verlässt. Gegebenenfalls ist die Höhe C der Längsvorschubeinheit 31 anzuheben, damit die Längsvorschubeinheit 31 über die unbeladene Plattform 10a verfahren werden kann. Bei Bedarf kann die Längsvorschubeinheit 31 dann wieder auf die dem Lagerinneren zugewandte Seite der Übergabestation 20 verfahren werden, siehe **Figuren 14** und **15****.**

Auf diese Weise wurde eine beladene Plattform 10b mit einer unbeladenen Plattform 10a von einer Übergabestation 20 eines ersten Ausführungsbeispiels des erfindungsgemäßen Logistiksystems zu einem LKW 3 ausgetauscht, d.h. es wurde ein Beladevorgang durchgeführt. Um umgekehrt eine beladene Plattform 10b mit einer unbeladenen Plattform 10a von einem LKW 3 zu einer Übergabestation 20 einer Ausführungsform des erfindungsgemäßen Logistiksystems auszutauschen, d.h. um einen Entladevorgang durchzuführen, sind die oben erläuterten Schritte der **Figuren 7 bis 15** in umgekehrter Reihenfolge durchzuführen.

Die **Figuren 16 bis 19** zeigen eine schematische Prinzipskizze einer Übergabestation 20 gemäß eines zweiten Ausführungsbeispiels der vorliegenden Erfindung. Dabei ist die Übergabestation 20 mobil ausgeführt, d.h. die Übergabestation 20 kann als Ganzes von einem Gabelstapler aufgenommen und verfahren werden. Die Übergabestation 20 kann in einer Aufnahme 21 eine unbeladene Plattform 10a oder eine beladene Plattform 10b aufnehmen und diese in Beförderungsrichtung B mittels zweier seitlich vorgesehener Quervorschubeinheiten 33 verfahren. Die Übergabestation 20 weist dabei ferner zwei Gabelöffnungen 34 auf, in die die Gabeln eines Gabelstaplers eingreifen können, um so die Übergabestation 20 greifen, anheben und verfahren zu können.

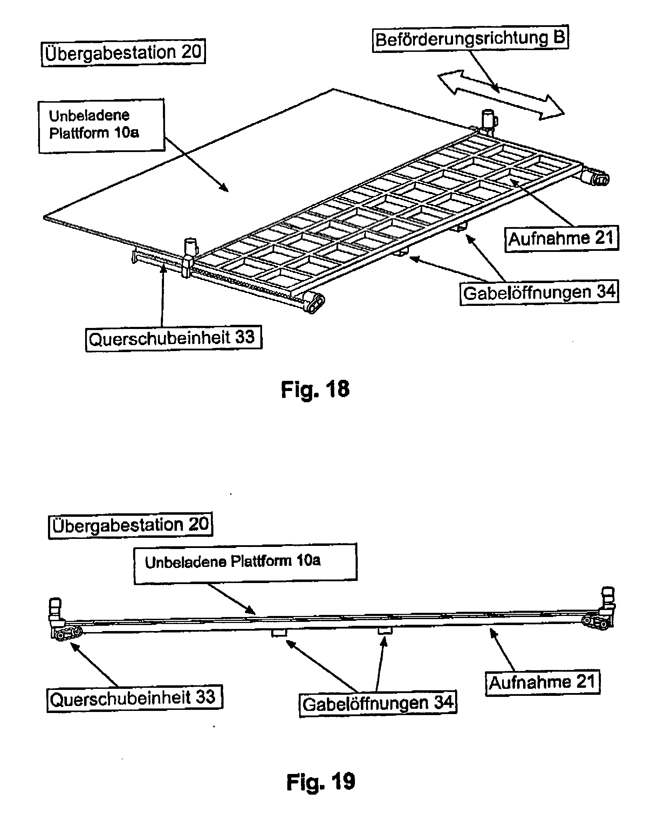

Dabei zeigt die **Figur 16** eine schematische Prinzipskizze der Übergabestation 20 mit einer in der Aufnahme 21 aufgenommenen unbeladenen Plattform 10a, die **Figur 17** eine schematische Prinzipskizze der Übergabestation 20 mit einer Aufnahme 21 ohne Plattform 10a und 10b und die **Figur 18** eine schematischen Prinzipskizze der Übergabestation 20 mit einer ungefähr zur Hälfte gegenüber der Aufnahme 21 verfahrenen unbeladenen Plattform 10a. Die **Figur 19** zeigt eine schematische Prinzipskizze der Übergabestation 20 in einer seitlichen Ansicht.

Bei einem Beladevorgang wird eine von einem Gabelstapler aufgenommene, leere Übergabestation 20 zu einer z.B. beladenen Plattform 10b transportiert und dort auf die Höhe der beladenen Plattform 10b angehoben oder abgesenkt. Dabei kann die beladene Plattform 10b auf dem Boden eines Lagergebäudes oder auch in der Aufnahme 21 einer Übergabestation 20 vorhanden sein. Die beladenen Plattform 10b wird von der Übergabestation 20 des Gabelstaplers auf dessen Aufnahme 21 verfahren. Dann kann der Gabelstapler zu einem LKW 3 fahren, der eine leere Ladefläche aufweist. Es ist allerdings auch denkbar, eine beladene Plattform 10b über eine unbeladene Plattform 10a auf der Ladefläche eines LKW 3 zu stapeln.

In beiden Fällen wird der Gabelstapler derart neben der Ladefläche des LKWs 3 positioniert und ausgerichtet, dass die beladene Plattform 10b in der Höhe über die leere Ladefläche geschoben werden kann und die seitlichen Maße der beladenen Plattform 10b mit den Maßen der leeren Ladefläche des LKWs 3 in Deckung gebracht werden können. Nun wird die beladene Plattform 10b mittels der Quervorschubeinheiten 33 in Beförderungsrichtung B auf die leere Ladefläche des LKWs 3 geschoben. Damit ist der Beladevorgang abgeschlossen und der Gabelstapler kann sich von dem LKW 3 entfernen. Vor der Abfahrt des LKWs 3 ist gegebenenfalls die beladene Plattform 10b zu sichern. Anstatt einer beladenen Plattform 10b kann auf gleiche Art und Weise auch eine unbeladene Plattform 10a auf einen LKW 3 geladen werden. Ein Entladevorgang, bei dem eine unbeladene Plattform 10a oder eine beladene Plattform 10b von einem LKW 3 herunter befördert und mittels des Gabelstapler von dem LKW 3 weg transportiert wird, wird in entgegengesetzter Reihenfolge der oben erläuterten Schritte durchgeführt.

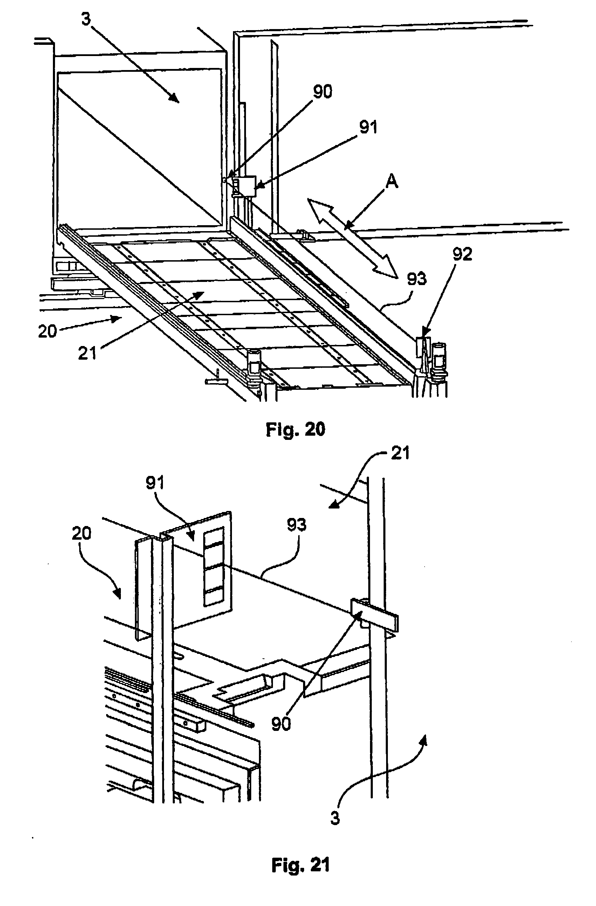

**Figur 20** zeigt eine schematische Ansicht eines Positioniersystems mit einer Laserstrahlquelle 90, einer ersten Markierungsaufnahme 91 und einer zweiten Markierungsaufnahme 92. Diese Positioniersystem ist geeignet, zur einfachen und kostengünstigen Ausrichtung der Ladefläche des LKWs 3 und der Aufnahme 21 der Übergabestation 20 verwendet zu werden. Die Laserstrahlquelle 90 wird dabei seitlich an der Rückseite des LKW 3 an einer entsprechenden Aufnahme, die bei jedem beliebigen LKW 3 einfach und kostengünstig nachgerüstet werden kann, montiert, siehe **Figur 21****.** Bei der Anbringung der Aufnahme bzw. Montage der Laserstrahlquelle 90 ist es entscheidend, dass der Laserstrahl exakt in Richtung der Längsachse des LKW 3 von diesem weg ausgesendet wird, d.h. genau rechtwinklig zu der Rückseite des LKW 3. Nur bei einer exakten Ausrichtung der Laserstrahlquelle ist auch eine exakte Ausrichtung zwischen LKW 3 und Übergabestation 20 mittels des Laserstrahls der Laserstrahlquelle 90 möglich.

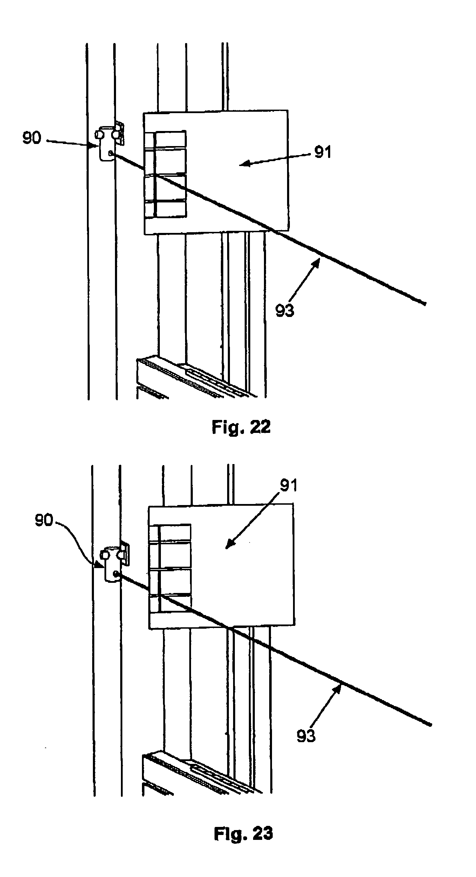

**Figur 22** zeigt eine schematische Darstellung der ersten Markierungsaufnahme 91 des Positioniersystems, die an dem vorderen Bereich der Übergabestation 20, d.h. an dem dem LKW 3 zugewandten Bereich der Übergabestation 20, vorgesehen ist. Dabei ist in dieser Ausführungsform die erste Markierungsaufnahme 91 als eine Plexiglasplatte ausgebildet, Die Markierungen der ersten Markierungsaufnahme 91 sind horizontal und vertikal verlaufende Linien, die z.B. dadurch ausgebildet werden, dass lediglich die Bereiche dieser linienförmigen Höhen- und Seitenmarkierungen durchsichtig ausgebildet werden während die restliche Plexiglasplatte absorbierend ausgebildet wird. Hierdurch zeigt die erste Markierungsaufnahme 91 in dem dargestellten Ausführungsbeispiel drei horizontale Höhenmarkierungen und eine vertikale Seitenmarkierung. Die untere, mittlere und obere Höhenmarkierung der ersten Markierungsaufnahme 91 sind in den **Figuren 22 bis 24** explizit ausgewiesen schematisch dargestellt.

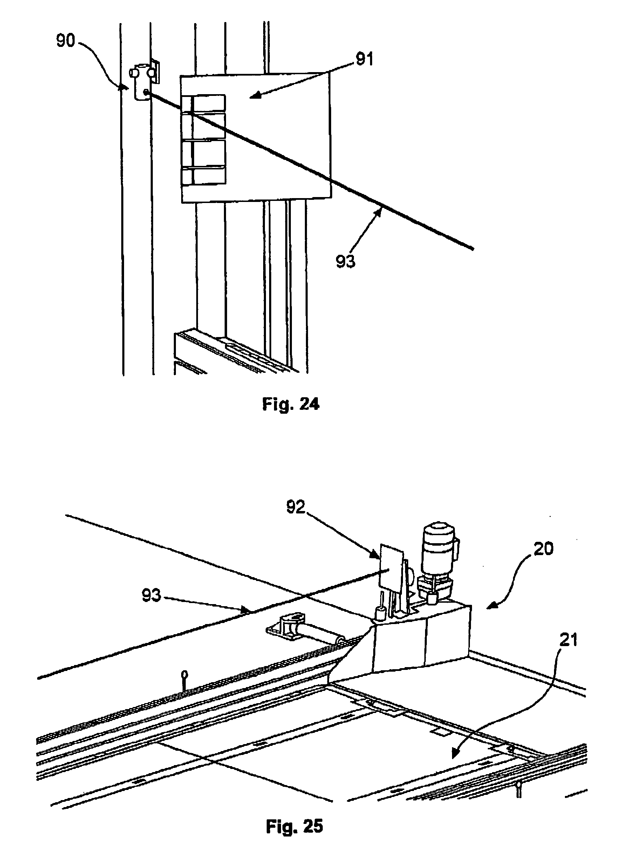

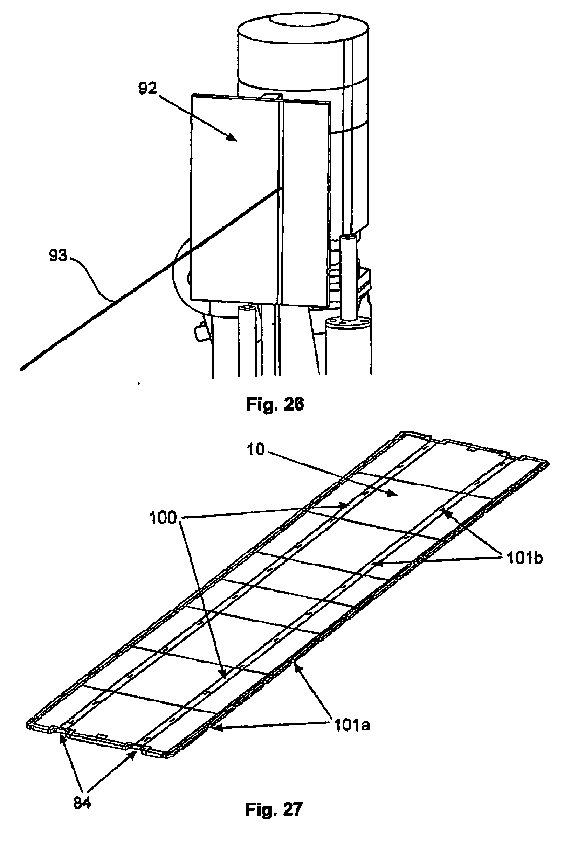

Die **Figuren 25** und **26** zeigen eine schematische Darstellung der zweiten Markierungsaufnahme 92, die an dem hinteren Bereich der Übergabestation 20, d.h. an dem dem LKW 3 abgewandten Bereich der Übergabestation 20, vorgesehen ist. Die zweite Markierungsaufnahme 92 ist als absorbierende Fläche ausgebildet, damit der Laserstrahl der Laserstrahlquelle 90 auf der zweiten Markierungsaufnahme 92 einen Laserpunkt ausbildet, falls der Laserstrahl durch eine der Höhenmarkierungen und bzw. oder Seitenmarkierung der ersten Markierungsaufnahme 91 hindurchtritt. Dabei ist zu beachten, dass die Seitenmarkierung der ersten Markierungsaufnahme 91 so ausgebildet ist, die Farbe des Laserstrahl zu verändern. Dies bedeutet, dass aufgrund der Farbe des Laserpunktes auf der zweiten Markierungsaufnahme 92 unterschieden werden kann, ob der Laserstrahl lediglich durch eine der Höhenmarkierungen hindurchgetreten ist - dann weist der Laserpunkt die Farbe des Laserstrahls auf, in der der Laserstrahl die Laserstrahlquelle 90 verlassen hat - oder ob der Laserstrahl gleichzeitig oder lediglich durch die Seitenmarkierung der ersten Markierungsaufnahme 91 hindurchgetreten ist - dann weist der Laserpunkt, wenn er auf die zweiten Markierungsaufnahme 92 trifft, eine andere Farbe entsprechend der Ausgestaltung der Seitenmarkierung auf, die er durchtreten hat.

Hierdurch kann aufgrund der Farbe des Laserpunktes auf der zweiten Markierungsaufnahme 92 unterschieden werden, ob durch den Laserpunkt lediglich die Ausrichtung der Übergabestation 20 auf einer bestimmten Höhe gegenüber der Ladefläche des LKWs 3 angezeigt wird oder ob - gleichzeitig oder alternativ - die richtige seitliche Ausrichtung oder richtige Winkelstellung um die Hochachse eingenommen ist, um die Übergabe von Plattformen 10 zwischen LKW 3 und Übergabestation 20 durchführen zu können.

Mittels dieses Positioniersystems kann ein Bediener beim Verfahren der Übergabestation 20 gegenüber dem LKW 3 zwecks Feinpositionierung und -ausrichtung schnell, einfach und zuverlässig erkennen, in welcher Richtung (seitlich und bzw. oder in der Höhe und bzw. oder schwenken um die Hochachse) er die Übergabestation 20 weiter verfahren bzw. schwenken muß, um die Aufnahme 21 der Übergabestation 20 gegenüber der Ladefläche des LKWs 3 exakt für die Übergabe von Plattformen 10 zu positionieren und auszurichten. Wird gar kein Laserpunkt auf der zweiten Markierungsaufnahme 92 abgebildet, so kann er durch die Abbildung eines Laserpunktes auf den absorbierenden Bereichen der ersten Markierungsaufnahme 91 erkennen, in welche Richtung in der Höhe er die Übergabestation 20 zu verfahren hat, um die gewünschte Höhe zu erreichen. Die gewünschte Höhe kann dabei die gleiche Höhe von Ladefläche des LKWs 3 und der Aufnahme 21 der Übergabestation 20 sein. Die gewünschte Höhe kann auch die gleiche Höhe der Oberkante einer Plattform 10 und der Ladefläche des LKWs 3 oder der Aufnahme 21 der Übergabestation 20 sein, falls eine Plattform 10 über eine andere Plattform 10 befördert werden soll. Daher weist die erste Markierungsaufnahme 91 mehrere Höhenmarkierungen auf, die um ein vielfaches der Höhe einer Plattform 10 übereinander angeordnet sind.

Wird die Übergabestation 20 von dem Bediener derart in der Höhe positioniert, dass der Laserstrahl durch eine der Höhenmarkierungen der ersten Markierungsaufnahme 91 hindurchtritt, so wird ein Laserpunkt solange auf der zweiten Markierungsaufnahme 92 abgebildet, solange beim weiteren Verfahren der Übergabestation 20 diese Höhe beibehalten wird. Auf dieser Höhe kann die Übergabestation 20 nun seitlich so weit verfahren werden, bis sich die Farbe der Laserpunktes verändert. Hierdurch wird angezeigt, dass der Laserstrahl der Laserquelle 90 durch die Seitenmarkierung der ersten Markierungsaufnahme 91 hindurchtritt. Nun kann die Übergabestation 20 so um die eigene Hochachse geschwenkt werden, bis der farbige Laserpunkt auf der Seitenmarkierung der zweiten Markierungsaufnahme 92 abgebildet wird. In dieser Konfiguration sind die Höhe der Übergabestation 20 und des LKWs 3 aufeinander wie gewünscht auf ein vielfaches der Höhe einer Plattform 10 abgestimmt, die Übergabestation 20 seitlich mit den Maßen der Ladefläche des LKWs 3 in Übereinstimmung gebracht und die Längsachsen der Übergabestation 20 und des LKWs 3 sind in Flucht zueinander. Nun können Plattformen 10 zwischen der Übergabestation 20 und dem LKW 3 ausgetauscht werden, ohne dass diese Plattformen 10 sich verklemmen oder verkanten oder mit dem LKW 3 oder der Übergabestation 10 aneinander stoßen.

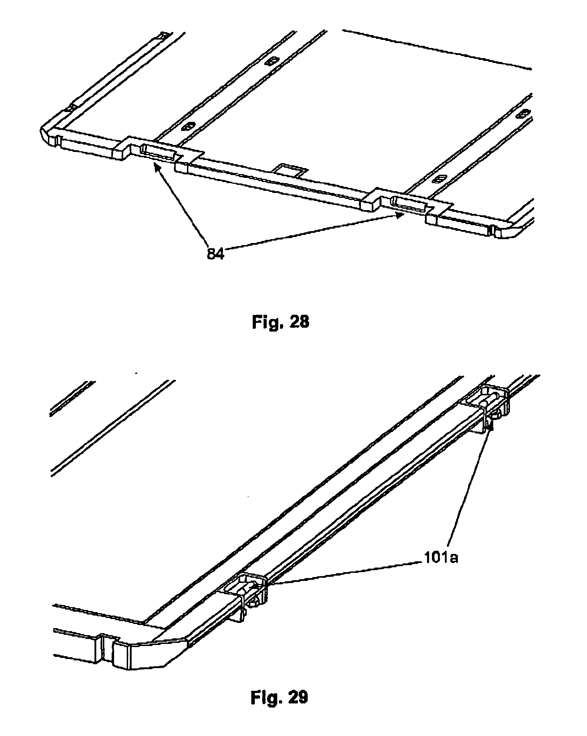

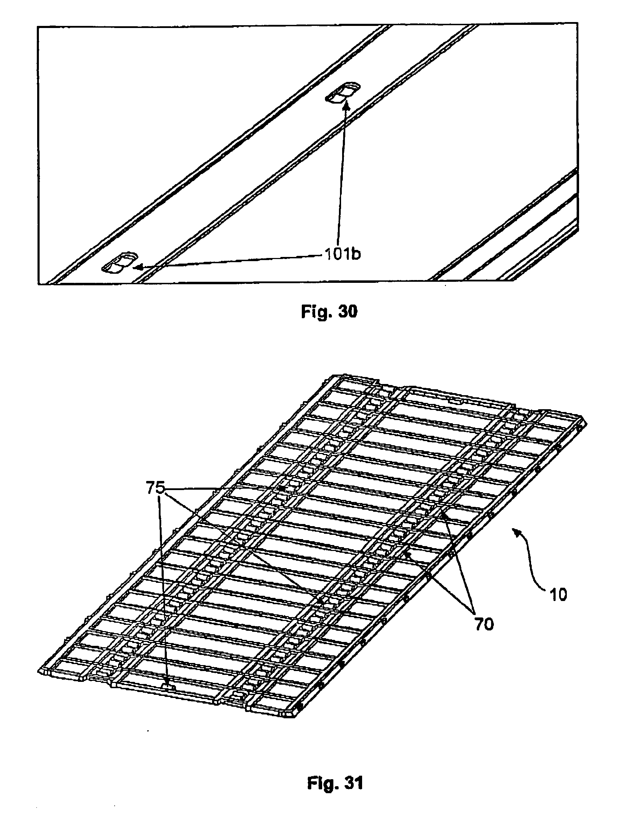

**Figur 27** zeigt eine schematische Darstellung eines bevorzugten Ausführungsbeispiels einer Plattform 10 des erfindungsgemäßen Logistiksystems. Dabei weist die Plattform 10 Aussparungen 84 zur Aufnahme einer Plattformsicherung 80 wie bereits oben beschrieben auf, siehe auch **Figur 28****.** Ferner sind an den seitlichen Außenkanten der Plattform 10 Zurrpunkte 101a vorgesehen, um die Fracht 11 z.B. mittels Spanngurten auf der Plattform 10 zu sichern, siehe auch **Figur 29****.** Die Plattform 10 dieses Ausführungsbeispiels weist ferner zwei Laufflächen 100 auf ihrer Oberseite auf, die z.B. aus Metall gefertigt sind. In diesen Laufflächen 100 sind ebenfalls Zurrpunkte 101 a eingelassen, um auch an diesen Punkten 101 die Fracht 11 sichern zu können, siehe auch Figur 30. Diese Laufflächen 100 dienen dazu, dass auf diesen Flächen 100 die Laufrollen 75 einer anderen Plattform 10 laufen können, wenn eine Plattform 10 über eine andere Plattform 10 befördert wird. Hierdurch wird für die Laufrollen 75 der oberen Plattform 10 eine definierte, ebene und gegen Beschädigung und Abnutzung beschützte Oberfläche zur Verfügung gestellt, um auch eine Beschädigung und Abnutzung der Laufrollen der oberen Plattform zu vermeiden bzw. zu reduzieren und eine leichtgängige und kraftsparende Beförderung der beiden Plattformen übereinander zu gewährleisten.

**Figur 31** zeigt eine schematische Darstellung der Unterseite einer Plattform 10. In dieser Unterseite sind Radkästen 70 eingelassen, in denen wiederum Räder 75 bzw. Laufrollen 75 vorgesehen sind. Dabei sind in dieser bevorzugten Ausführungsform der Plattform 10 pro Radkasten 70 zwei Räder 75 vorgesehen, die entsprechend mit einem geringeren Durchmesser ausfallen können als bei der Verwendung lediglich eines Rades 75 pro Radkasten 70. Hierdurch wird die Gewichtskraft der Plattform 10 und damit auch der Fracht 11 über doppelt so viele Kontaktpunkte auf den Untergrund übertragen als bei Verwendung von lediglich einem Rad 75 pro Radkasten 70. Ferner fällt auch der Abstand zwischen den Kontaktpunkten der Räder 75 bei der Verwendung doppelt so vieler Räder 75 deutlich geringer aus, so dass bei der Übergabe der Plattform 10 zwischen LKW 3 und Übergabestation 20 die Gewichtskraft auch gleichmäßiger übergeben werden kann und es bei dem LKW 3 zu keiner so deutlichen Absenkung kommt wie bei der Verwendung von weniger Rädern 75.

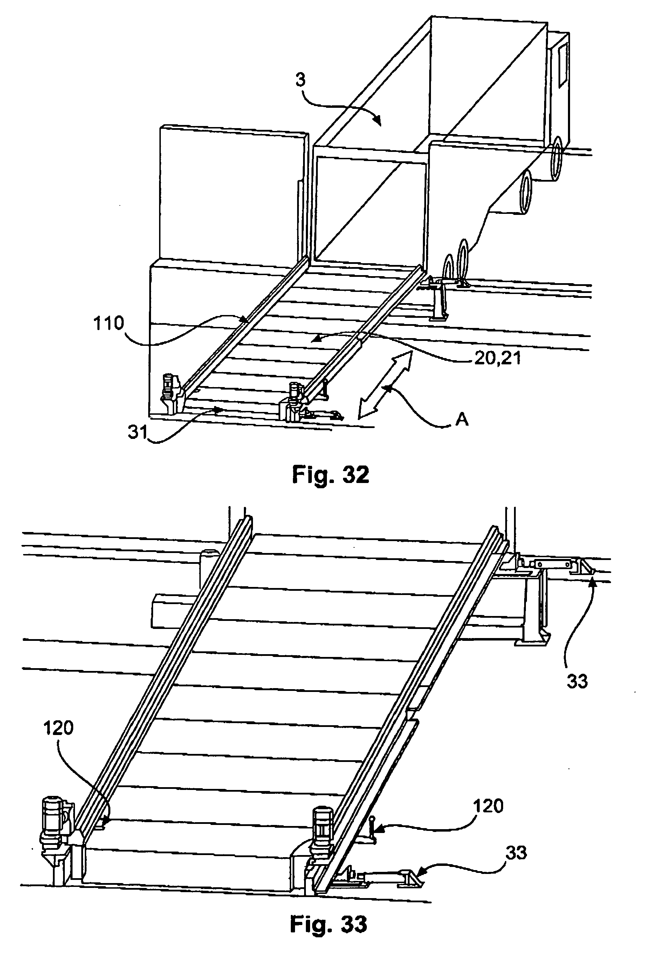

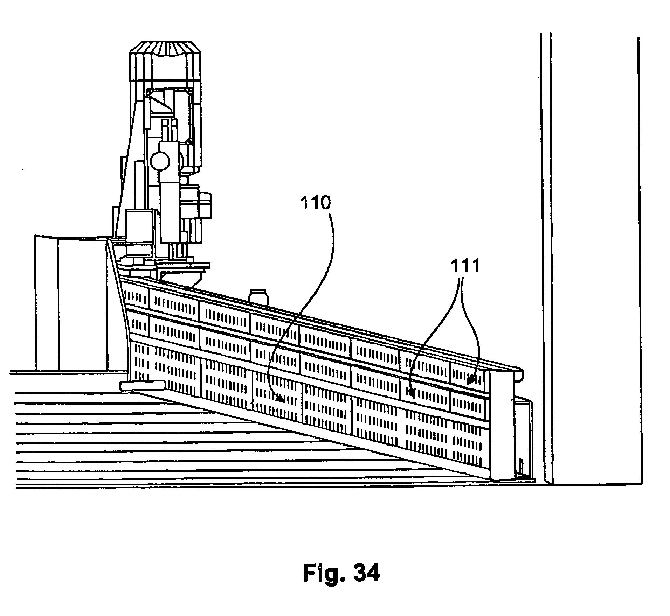

**Figur 32** zeigt eine schematische Darstellung einer Übergabestation 20 mit seitlichen Führungen 110 auf beiden Seiten der Aufnahme 21. Eine detailierte Darstellung einer der beiden seitlichen Führungen 110 ist in **Figur 34** dargestellt. Dabei weisen die Führungen 110 zwei übereinander angeordnete Führungsleisten 111 auf. Die untere Führungsleiste 111 ist auf der Höhe der unteren aufzunehmenden Plattform 10 vorgesehen und die obere Führungsleiste 111 ist auf der Höhe der oberen aufzunehmenden Plattform 10 vorgesehen. Auf diese Art und Weise können beide aufzunehmenden Plattformen 10 seitlich geführt werden, um exakt übereinander positioniert und ausgerichtet in der Aufnahme 21 ausgenommen zu werden. So kann verlässlich sichergestellt werden, dass jede Plattform 10 und ganz besonders die beiden übereinander angeordneten und miteinander gemeinsam zu befördernden Plattformen 10 stets in Flucht mit der Ladefläche des LKW 3 ausgerichtet sind. Da die Maße der Plattformen 10 an den Maßen der Ladefläche des LKW 3 angepasst sind, ist eine sehr exakte Ausrichtung der Plattformen 10 entscheidend, um den Ent- und Beladevorgang mit einer Plattform 10 und ganz besonders mit zwei übereinander liegenden Plattformen 10 korrekt durchführen zu können.

**Figur 33** zeigt eine schematische Darstellung einer Übergabestation 20 mit einer Arretierung 120. Diese Arretierung 120 ist vorgesehen, um die untere Plattform 10 in der Aufnahme 21 zu halten, d.h. zu fixieren, falls lediglich die obere Plattform 10 aus der Aufnahme 21 zu dem LKW 3 hin bewegt werden soll. Hierzu kann z.B. die Arretierung 120 seitlich gegen die Seiten der Plattform 10 drücken, um die Plattform 10 so festzuklemmen. Alternativ oder zusätzlich kann auch ein Eingriff in die Unterseite der Plattform 10 erfolgen. Durch das Arretieren mittels der Arretierung 120 ist zumindest sicherzustellen, dass die untere Plattform 10 in der Aufnahme 21 verbleibt und sich nicht mit bewegt, falls die obere Plattform 10 aus der Aufnahme 21 heraus bewegt wird.

Die oben erläuterten erfindungsgemäßen Verfahren und Ausführungsformen des entsprechenden erfindungsgemäßen Logistiksystem bieten eine einfache, kostengünstige und platzsparende Möglichkeit, das Logistiksystem des Dokuments EP 1 808 387 A2 weiterzuentwickeln und so die genannten Nachteile zu überwinden.

## Patentansprüche

1. Verfahren zum Beladen von Fahrzeugen,
dadurch gekennzelchnet,
dass ein Fahrzeug (3) mit einer unbeladenen Plattform (10a) vor einer Übergabestation (20) so positioniert wird, dass Plattformen (10a, 10b) in Beförderungsrichtung (A) von der Übergabestaüon (20) zu dem Fahrzeug (3) und/oder von dem Fahrzeug (3) zu der Übergabestation (20) beförderbar sind,
dass eine beladene Plattform (10b) von der Übergabestation (20) über die unbeladene Plattform (10a) des Fahrzeugs (3) befördert wird,
dass die unbeladene Plattform (10a) zusammen mit der beladenen Plattform (10b) von dem Fahrzeug (3) zu der Übergabestation (20) befördert werden: und
dass die beladene Plattform (10b) zu dem Fahrzeug (3) befördert wird und die unbeladene Plattform (10a) in der Übergabestation (20) verbleibt.

2. Verfahren zum Entladen von Fahrzeugen,
**dadurch gekennzeichnet,**
**dass** ein Fahrzeug (3) mit einer beladenen Plattform (10b) vor einer Übergabestation (20) so positioniert wird, dass Plattformen (10a, 10b) in Beförderungsrichtung (A) von der Übergabestation (20) zu dem Fahrzeug (3) und/oder von dem Fahrzeug (3) zu der Übergabestation (20) beförderbar sind,
**dass** die beladene Plattform (10b) von dem Fahrzeug (3) über eine unbeladene Plattform (10a) der Übergabestation (20) befördert wird,
**dass** die unbeladene Plattform (10a) zusammen mit der beladenen Plattform (10b) von der Übergabestation (20) zu dem Fahrzeug (3) befördert werden; und
**dass** die beladene Plattform (10b) zu der Übergabestation (20) befördert wird und die unbeladene Plattform (10a) in dem Fahrzeug (3) verbleibt.

3. Logistiksystem zur Übergabe einer Plattform (10a, 10b) in deren Beförderungsrichtung (A) zu einem Fahrzeug (3) und/oder zur Übernahme einer Plattform (10a, 10b) von einem Fahrzeug (3),
wobei die Ausmaße der Plattform (10a, 10b) an denen der Ladefläche des Fahrzeugs (3) angepasst sind,
wobei das Logistiksystem eine Übergabestation (20) für die Plattform (10a, 10b) aufweist, um die Plattform (10a, 10b) in Beförderungsrichtung (A) von dem Fahrzeug (3) zu übernehmen oder dorthin zu übergeben, und
wobei die Übergabestation (20) eine Aufnahme (21) aufweist, auf der die Plattform (10a, 10b) zur Anlage kommt und von der die Plattform (10a, 10b) in Beförderungsrichtung (A) zu dem Fahrzeug (3) und/oder von dem Fahrzeug (3) beförderbar ist,
wobei die Übergabestation (20) eine Längsvorschubeinheit (31) aufweist, um eine Plattform (10a, 10b) in Beförderungsrichtung (A) zu bewegen,
**dadurch gekennzeichnet,**
**dass** die Längsvorschubeinheit (31) dazu ausgebildet ist, zwei Plattformen (10a, 10b) vertikal übereinander aufzunehmen, und
**dass** die Längsvorschubeinheit (31) dazu ausgebildet ist, wahlweise die zwei Plattformen (10a, 10b) in Beförderungsrichtung (A) zu dem Fahrzeug (3) und/oder von dem Fahrzeug (3) zu bewegen oder die obere Plattform (10b) über die untere Plattform (10a) in Beförderungsrichtung (A) zu dem Fahrzeug (3) und/oder von dem Fahrzeug (3) zu bewegen.

4. Logistiksystem nach Anspruch 3,
wobei die Übergabestation (20) für die Plattform (109, 10b) dazu eingerichtet ist, um die Plattform (10a, 10b) in βeförderungsrichtung (B) von dem Fahrzeug (3) zu übernehmen oder dorthin zu übergeben.
wobei die Plattform (10a, 10b) in Beförderungsrichtung (B) von der Aufnahme (21), auf der die Plattform (10a, 10b) zu Anlage kommt, zu dem Fahrzeug (3) und/oder von dem Fahrzeug (3) beförderbar ist,
und die Übergabestation (20) von einem Gabelstapler aufgenommen werden kann.

5. Logistiksystem nach Anspruch 3 oder 4,
wobei das Fahrzeug (3) eine Laserstrahlquetie (90) aufweist, und
die Übergabestation (20) eine erste Markierungsaufnahme (91) und eine zweite Markierungsaufnahme (92) aufweist,
wobei die erste Markierungsaufnahme (91) derart ausgestaltet ist, dass der Laserstrahl der Laserstrahlquelle (90) durch die erste Markierungsaufnahme (91) hindurchtritt und auf die zweite Markierungsaufnahme (92) auftrifft.

6. Logistiksystem nach einem der Ansprüche 3 bis 5,
wobei die Plattform (10) auf ihrer Oberseite mehrere Laufflächen (100) und an ihrer Unterseite mehrere Räder (75) aufweist,
wobei die Laufflächen (100) und die Räder (75) derart übereinander angeordnet sind, dass die Räder (75) einer Plattform (10) auf den Laufflächen (100) einer anderen Plattform (100) laufen, wenn die eine Plattform (10) über die andere Plattform (10) befördert wird.

7. Logistiksystem nach einem der Ansprüche 3 bis 6,
wobei die Übergabestation (20) an beiden Seiten der Aufnahme (21) Führungen (110) aufweist, und/oder
die Übergabestation (20) eine Arretierung (120) zum Arretieren einer in der Aufnahme (21) befindlichen Plattform (10) aufweist.

## Claims

1. Method for loading vehicles, **characterised in that** a vehicle (3) with an unloaded platform (10a) is positioned in front of a transfer station (20) in such a way that platforms (10a, 10b) can be conveyed in the conveying direction (A) from the transfer station (20) to the vehicle (3) and/or from the vehicle (3) to the transfer station (20), **in that** a loaded platform (10b) is conveyed from the transfer station (20) over the unloaded platform (1a) of the vehicle (3), **in that** the unloaded platform (10a) together with the loaded platform (10b) are conveyed from the vehicle (3) to the transfer station (20); and **in that** the loaded platform (10b) is conveyed to the vehicle (3) and the unloaded platform (10a) remains in the transfer station (20).

2. Method for unloading vehicles, **characterised in that** a vehicle (3) with a loaded platform (10b) is positioned in front of the transfer station (20) in such a way that platforms (10a, 10b) can be conveyed in the conveying direction (A) from the transfer station (20) to the vehicle (3) and/or from the vehicle (3) to the transfer station (20), **in that** the loaded platform (10b) is conveyed from the vehicle (3) over an unloaded platform (10a) of the transfer station (20), **in that** the unloaded platform (10a) together with the loaded platform (10b) are conveyed from the transfer station (20) to the vehicle (3); and **in that** the loaded platform (10b) is conveyed to the transfer station (20) and the unloaded platform (10a) remains in the vehicle (3).

3. Logistics system for transferring a platform (10a, 10b) in the conveying direction (A) thereof to a vehicle (3) and/or to accept a platform (10a, 10b) from a vehicle (3), wherein the dimensions of the platform (10a, 10b) are adapted to those of the loading surface of the vehicle (3), wherein the logistics system has a transfer station (20) for the platform (10a, 10b), in order to accept the platform (10a, 10b) in the conveying direction (A) from the vehicle (3) or to transfer it thereto, and wherein the transfer station (20) has a receiver (21), on which the platform (10a, 10b) comes to rest and from which the platform (10a, 10b) can be conveyed in the conveying direction (A) to the vehicle (3) and/or from the vehicle (3), wherein the transfer station (20) has a longitudinal feed unit (31), in order to move a platform (10a, 10b) in the conveying direction (A), **characterised in that** the longitudinal feed unit (31) is configured to receive two platforms (10a, 10b) vertically one above the other, and **in that** the longitudinal feed unit (31) is configured to selectively move the two platforms (10a, 10b) in the conveying direction (A) to the vehicle (3) and/or from the vehicle (3) or to move the upper platform (10b) over the lower platform (10a) in the conveying direction (A) to the vehicle (3) and/or from the vehicle (3).

4. Logistics system according to claim 3, wherein the transfer station (20) for the platform (10a, 10b) is set up to accept the platform (10a, 10b) in the conveying direction (B) from the vehicle (3) or to transfer it thereto, wherein the platform (10a, 10b) can be conveyed in the conveying direction (B) from the receiver (21), on which the platform (10a, 10b) comes to rest, to the vehicle (3) and/or from the vehicle (3), and the transfer station (20) can be received by a forklift truck.

5. Logistics system according to claim 3 or 4, wherein the vehicle (3) has a laser beam source (90), and the transfer station (20) has a first marking receiver (91) and a second marking receiver (92), wherein the first marking receiver (91) is configured in such a way that the laser beam or the laser beam source (90) passes through the first marking receiver (91) and impinges on the second marking receiver (92).

6. Logistics system according to any one of claims 3 to 5, wherein the platform (10) has a plurality of running surfaces (100) on its upper side and a plurality of wheels (75) on its lower side, wherein the running surfaces (100) and the wheels (75) are arranged one above the other in such a way that the wheels (75) of a platform (10) run on the running surfaces (100) of another platform (100) when one platform is conveyed over the other platform (10).

7. Logistics system according to any one of claims 3 to 6, wherein the transfer station (20) has guides (110) on both sides of the receiver (21), and/or the transfer station (20) has a lock (120) to lock a platform (10) located in the receiver (21).

## Revendications

1. Procédé pour le chargement de véhicules,
**caractérisé en ce**
**qu'**un véhicule (3) doté d'une plate-forme non chargée (10a) est positionné devant une station de transfert (20) de telle manière que des plates-formes (10a, 10b) puissent être transportées dans une direction de transport (A) depuis la station de transfert (20) vers le véhicule (3) et/ou depuis le véhicule (3) vers la station de transfert (20),
en ce qu'une plate-forme chargée (10b) est transportée depuis la station de transfert (20) sur la plate-forme non chargée (10a) du véhicule (3),
en ce que la plate-forme non chargée (10a) et la plate-forme chargée (10b) sont transportées ensemble depuis le véhicule (3) vers la station de transfert (20), et
en ce que la plate-forme chargée (10b) est transportée vers le véhicule (3) et la plate-forme non chargée (10a) reste dans la station de transfert (20).

2. Procédé pour le déchargement de véhicules,
**caractérisé en ce**
**qu'**un véhicule (3) doté d'une plate-forme chargée (10b) est positionné devant une station de transfert (20) de telle manière que des plates-formes (10a, 10b) puissent être transportées dans une direction de transport (A) de la station de transfert (20) vers le véhicule (3) et/ou du véhicule (3) vers la station de transfert (20),
en ce que la plate-forme chargée (10b) est transportée depuis le véhicule (3) sur une plate-forme non chargée (10a) de la station de transfert (20),
en ce que la plate-forme non chargée (10a) et la plate-forme chargée (10b) sont transportées ensemble depuis la station de transfert (20) vers le véhicule (3), et
en ce que la plate-forme chargée (10b) est transportée vers la station de transfert (20) et la plate-forme non chargée (10a) reste dans le véhicule (3).

3. Système logistique pour le transfert d'une plate-forme (10a, 10b) dans la direction de transport (A) de cette dernière vers un véhicule (3) et/ou pour la prise en charge d'une plate-forme (10a, 10b) depuis un véhicule (3),
dans lequel les dimensions de la plate-forme (10a, 10b) sont adaptées à celles de la surface de chargement du véhicule (3),
dans lequel le système logistique présente une station de transfert (20) pour la plate-forme (10a, 10b) afin de prendre en charge la plate-forme (10a, 10b) dans la direction de transport (A) depuis le véhicule (3) ou de l'y transférer, et
dans lequel la station de transfert (20) présente un réceptacle (21) sur lequel la plate-forme (10a, 10b) vient en appui et depuis lequel la plate-forme (10a, 10b) peut être transportée dans la direction de transport (A) vers le véhicule (3) et/ou depuis le véhicule (3),
dans lequel la station de transfert (20) présente une unité d'avance longitudinale (31) afin de déplacer une plate-forme (10a, 10b) dans la direction de transport (A),
**caractérisé en ce**
**que** l'unité d'avance longitudinale (31) est réalisée de manière à recevoir deux plates-formes (10a, 10b) l'une sur l'autre verticalement, et en ce
**que** l'unité d'avance longitudinale (31) est réalisée de manière à, au choix, déplacer les deux plates-formes (10a, 10b) dans la direction de transport (A) vers le véhicule (3) et/ou depuis le véhicule (3) ou déplacer la plate-forme supérieure (10b) sur la plate-forme inférieure (10a) dans la direction de transport (A) vers le véhicule (3) et/ou depuis le véhicule (3).

4. Système logistique selon la revendication 3,
dans lequel la station de transfert (20) pour la plate-forme (10a, 10b) est prévue pour prendre en charge la plate-forme (10a, 10b) dans la direction de transport (B) depuis le véhicule (3) ou de l'y transférer,
dans lequel la plate-forme (10a, 10b) peut être transportée dans la direction de transport (B) depuis le réceptacle (21), sur lequel la plate-forme (10a, 10b) vient en appui, vers le véhicule (3) et/ou depuis le véhicule (3),
et la station de transfert (20) peut être reçue par un chariot élévateur à fourches.

5. Système logistique selon la revendication 3 ou 4,
dans lequel le véhicule (3) présente une source de rayonnement laser (90) et
la station de transfert (20) présente un premier dispositif de réception de marquage (91) et un deuxième dispositif de réception de marquage (92),
dans lequel le premier dispositif de réception de marquage (91) est configuré de telle manière que le rayonnement laser de la source de rayonnement laser (90) pénètre par le premier dispositif de réception de marquage (91) et parvienne jusqu'au deuxième dispositif de réception de marquage (92).

6. Système logistique selon l'une quelconque des revendications 3 à 5,
dans lequel la plate-forme (10) présente sur son côté supérieur plusieurs surfaces de roulement (100) et sur son côté inférieur plusieurs roues (75),
dans lequel les surfaces de roulement (100) et les roues sont disposées les unes au-dessus des autres de telle manière que les roues (75) d'une plate-forme (10) roulent sur les surfaces de roulement (100) d'une autre plate-forme (100) lorsque l'une des plates-formes (10) est transportée sur l'autre plate-forme (10).

7. Système logistique selon l'une quelconque des revendications 3 à 6,
dans lequel la station de transfert (20) présente, aux deux côtés du réceptacle (21), des guidages (110), et/ou
dans lequel la station de transfert (20) présente un dispositif de blocage (120) pour bloquer une plate-forme (10) se trouvant dans le réceptacle (21).
